# EUROPEAN PATENT SPECIFICATION

(11) **EP 1 939 312 B1**
(45) Date of publication and mention of the grant of the patent: **06.10.2010**
(21) Application number: 06781518.3
(22) Date of filing: 25.07.2006
(51) Int. Cl.: C22C 21/00, C22F 1/04, F28F 1/02, F28F 21/08, B23K 1/19, B23K 101/14

(54) **CLAD PLATE AND PROCESS FOR PRODUCTION THEREOF**
PLATTIERPLATTE UND HERSTELLUNGSVERFAHREN DAFÜR
PLAQUE DE PLACAGE PAR LAMINAGE ET PROCESSUS DE FABRICATION DE CELLE-CI

(30) Priority: 31.08.2005 JP 2005250844
(43) Date of publication of application: 02.07.2008
(73) Proprietor: SHOWA DENKO K.K., Tokyo 105-8518 (JP)
(72) Inventor: MINAMI, Kazuhiko, Oyama-shi Tochigi 3238678 (JP); KOBORI, Kazuhiro, Oyama-shi Tochigi 3238678 (JP); HISAYUKI, Koji, Oyama-shi Tochigi 3238678 (JP)
(74) Representative: Viering, Jentschura & Partner
(86) International application number: PCT/JP2006/314606
(87) International publication number: WO 2007/026481

(56) References cited:
- WO-A-03/089237
- JP-A- 4 036 432
- JP-A- 01 040 195
- JP-A- 02 011 291
- JP-A- 62 212 094
- JP-A- 2005 161 383
- US-A- 2 821 014
- US-A1- 2002 142 185

## Description

### TECHNICAL FIELD

The present invention relates to a clad member excellent in strength and corrosion resistance, especially to a clad member used as a material for heat exchanger tubular members, and a production method thereof. It also related to a heat exchanger using the heat exchanger tubular member and the production method thereof.

### BACKGROUND ART

In a parallel flow type aluminum automobile heat exchanger, it has been conventionally required to have high strength, high corrosion resistance as well as brazability. In general, Mg is added to an aluminum alloy to enhance the strength. However, since brazing such Mg-containing aluminum alloys using non-corrosive fluorine series flux causes poor brazability due do the reaction between the flux and Mg, only a small amount of Mg can be added. Therefore, it was difficult to produce an aluminum material high in strength and excellent in brazability.

Under the circumstances, in a brazing material in which a core material and a brazing material are cladded, it has been proposed to provide a clad member improved in brazability by adding Mg to the core material and forming an intermediate layer between the core material and the brazing material to restrain the reaction between Mg and flux (see Patent Documents Nos. 1 and 2)

In the clad member disclosed in Patent Document No. 1, an intermediate layer made of an Al-Mn-Si alloy is interposed between the core material made of an Al-Mn-Mg-Zn alloy and a brazing material made of an Al-Si alloy. In the clad member disclosed in Patent Document No. 2, an intermediate layer made of an Al-Mn series alloy is interposed between a core material made of an Al-Mn-Mg-Cu and a brazing material made of an Al-Si alloy.
Patent Document No. 1: Japanese Unexamined Laid-open Patent Publication No. S64-40195
Patent Document No. 2: Japanese Patent No. 4-036432.

The document US-A-2002/0142185 discloses a multi-layered brazing sheet comprising:
- a core layer of an aluminium alloy containing by weight % about 0.5-1.7 Mn, about 0.1-1 Mg, about 0.02-1.2 Cu, up to about 0.9 Si, about 0.02-0.25 Ti; up to 0.6 Fe and up to about 0.2 Zn;
- a first interliner layer positioned on one side of said core layer, said first interliner layer comprising an aluminium alloy containing by weight % about 0.02-1.1 Si, up to about 0.6 Fe, up to about 1.7 Mn, up to about 0.3 Cu, up to about 0.1 Mg, up to about 4 Zn, and up to about 0.25 Ti;
- a braze clad layer positioned on the other side of said first interliner layer, said clad layer comprising an aluminium alloy containing by weight % 5-15 Si, up to about 0.6 Fe, up to about 0.1 Mn, up to about 0.3 Cu and up to about 4 Zn; and
- a second interliner layer positioned on the other side of said core layer, said second interliner layer comprising an aluminium alloy containing by weight % about 0.02-1.1 Si, up to about 0.6 Fe, up to about 1.7 Mn, up to about 0.25 Cu, up to about 0.1 Mg, and up to about 6 Zn;
   wherein the amount of Si in said core layer alloy is less than in at least one of the said first and second interliner alloys.

### PROBLEMS TO BE SOLVED BY THE INVENTION

In the clad member disclosed in Patent Document No. 1, however, there was a problem that the brazability of the core material was poor because of the large amount of Zn contained therein. In the clad member disclosed in Patent Document No. 2, the Al-Mn series alloy contained in the intermediate layer causes slightly deteriorated strength. Containing no element for restraining Mg diffusion in the intermediate layer requires an intermediate layer having a sufficient thickness to restrain the reaction between Mg and flux, which makes it difficult to reduce the thickness of the intermediate layer, or the thickness of the clad member.

### MEANS FOR SOLVING PROBLEMS

The present invention was made in view of the aforementioned technical background, and aims to provide a clad member excellent in strength, brazability and corrosion resistance and the production method thereof. Furthermore, it also aims to provide a heat exchanger tubular member, a heat exchanger and a production method thereof using the clad member of the present invention.

The clad member of the present invention has the following structure as recited in the following Items [1] to [9].

[1] A clad member comprising a core material, an outer skin layer provided on one surface of the core material, and an inner skin layer provide on the other surface thereof via an intermediate layer,
wherein the core material is made of an aluminum alloy comprising Mn: 0.8 to 2 mass%, Mg: 0.2 to 1. 5 mass%, and the balance being Al and impurities,
wherein the outer skin layer is made of an aluminum alloy comprising Zn: 0.01 to 4 mass%, and the balance being Al and impurities;
wherein the intermediate layer is made of an aluminum alloy comprising Mn: 0.8 to 2 mass%, Zn: 0.35 to 3 mass%, and the balance being Al and impurities, and
wherein the inner skin layer is made of an Al-Si series brazing material.

[2] The cladmember as recited in the aforementioned Item 1, wherein the aluminum alloy constituting the core material further comprises Cu: 0.5 mass% or less.

[3] The clad member as recited in the aforementioned Item 1, wherein the aluminum alloy constituting the core material further comprises Ti: 0.03 to 0.25 mass% or less.

[4] The clad member as recited in the aforementioned Item 1, wherein the aluminum alloy constituting the intermediate layer further comprises Cu: 0.5 mass% or less.

[5] The clad member as recited in the aforementioned Item 1, wherein the aluminum alloy constituting the intermediate layer further comprises Fe: 0.8 mass% or less.

[6] The cladmember as recited in the aforementioned Item 1, wherein the aluminum alloy constituting the outer skin layer is 0.1 mass% or less in Mn concentration and 0.2 mass% or less in Cu concentration.

[7] The clad member as recited in any one of the aforementioned Items 1 to 6, wherein the intermediate layer is 10 to 70 µm in thickness.

[8] The clad member as recited in any one of the aforementioned Items 1 to 6, wherein the outer skin layer is 10 to 100 µm in thickness.

[9] The clad member as recited in any one of the aforementioned Items 1 to 6, wherein the intermediate layer after brazing is 20 to 300 µm in average grain size.

The tubular member for heat exchangers, the flat tube, and the header of the present invention has the following structure as recited in the following Items [10] to [15].

[10] A tubular member for heat exchangers produced by forming a clad member comprising a core material, an outer skin layer provided on one surface of the core material, and an inner skin layer provide on the other surface thereof via an intermediate layer into a tubular configuration with the outer skin layer facing outward,
wherein the core material is made of an aluminum alloy comprising Mn: 0.8 to 2 mass%, Mg: 0. 2 to 1. 5 mass%, and the balance being Al and impurities,
wherein the outer skin layer is made of an aluminum alloy comprising Zn: 0.01 to 4 mass%, and the balance being Al and impurities,
wherein the intermediate layer is made of an aluminum alloy comprising Mn: 0. 8 to 2 mass%, Zn: 0.35 to 3 mass%, and the balance being Al and impurities, and
wherein the inner skin layer is made of an Al-Si series brazing material.

[11] A flat tube for heat exchangers produced by forming a clad member comprising a core material, an outer skin layer provided on one surface of the core material, and an inner skin layer provide on the other surface thereof via an intermediate layer into a tubular conf iguration with the outer skin layer facing outward,
wherein the core material is made of an aluminum alloy comprising Mn: 0.8 to 2 mass%, Mg: 0. 2 to 1.5 mass%, and the balance being Al and impurities,
wherein the outer skin layer is made of an aluminum alloy comprising Zn: 0.01 to 4 mass%, and the balance being Al and impurities,
wherein the intermediate layer is made of an aluminum alloy comprising Mn: 0.8 to 2 mass%, Zn: 0.35 to 3 mass%, and the balance being Al and impurities, and
wherein the inner skin layer is made of an Al-Si series brazing material.

[12] The flat tube as recited in the aforementioned Item 11, wherein the aluminum alloy constituting the intermediate layer of the clad member is 0.3 mass% or less in Fe concentration.

[13] A header for heat exchangers produced by forming a clad member comprising a core material, an outer skin layer provided on one surface of the core material, and an inner skin layer provide on the other surface thereof via an intermediate layer into a tubular configuration with the outer skin layer facing outward,
wherein the core material is made of an aluminum alloy comprising Mn: 0.8 to 2 mass%, Mg: 0.2 to 1. 5 mass%, and the balance being Al and impurities,
wherein the outer skin layer is made of an aluminum alloy comprising Zn: 0.01 to 4 mass%, and the balance being Al and impurities,
wherein the intermediate layer is made of an aluminum alloy comprising Mn: 0.8 to 2 mass%, Zn: 0.35 to 3 mass%, and the balance being Al and impurities, and
wherein the inner skin layer is made of an Al-Si series brazing material.

[14] The header as recited in the aforementioned Item 13, the aluminum alloy constituting the intermediate layer of the clad member is 0.3 to 0.8 mass% in Fe concentration.

[15] The header as recited in the aforementioned Item 13 or 14, wherein the inner skin layer of the clad member is 70 to 300 µm in thickness.

The manufacturing method of a clad member according to the present invention has a structure as recited in the following Items [16] to [18].

[16] A method of manufacturing a clad member, the steps comprising:
disposing an outer skin layer made of an aluminum alloy comprising Zn: 0.01 to 4 mass%, and the balance being Al and impurities on one surface of a core material made of an aluminum alloy comprising Mn: 0.8 to 2 mass%, Mg: 0.2 to 1.5 mass%, and the balance being Al and impurities;
disposing an inner skin layer made of an Al-Si series brazing material on the other surface of the core material via an intermediate layer made of an aluminum alloy comprising Mn: 0.8 to 2 mass%, Zn: 0.35 to 3 mass%, and the balance being Al and impurities;
subjecting the core material, the inner skin layer, the outer skin layer and the intermediate layer to hot clad-rolling to obtain an intermediate material; and
subjecting the intermediate material to intermediate annealing at any point between rolling passes after the clad-rolling but before cold rolling, or between cold rolling after the clad-rolling.

[17] The method of manufacturing a clad member as recited in the aforementioned Item 16, wherein the intermediate annealing is executed at a temperature of 450 °C or below.

[18] The method of manufacturing a clad member as recited in the aforementioned Item 16 or 17, wherein the intermediate annealing is executed for 6 hours or less.

The heat exchanger according to the present invention has a structure as recited in the following Item [19].

[19] A heat exchanger in which a plurality of flat tubes and fins disposed between the flat tubes are brazed and the plurality of flat tubes and a header connected to one ends of the flat tubes are brazed,
wherein at least one of the flat tube and the header is a heat exchanger tubular member produced by forming a clad member having an outer skin layer provided on one surface side of a core material and an inner skin layer provided on the other side thereof via an intermediate layer into a tubular configuration with the outer skin layer facing outward, and
wherein the core material of the clad member is made of an aluminum alloy comprising Mn: 0.8 to 2 mass%, Mg: 0.2 to 1.5 mass%, and the balance being Al and impurities, the outer skin layer is made of an aluminum alloy comprising Zn: 0.01 to 4 mass%, and the balance being Al and impurities, the intermediate layer is made of an aluminum alloy comprising Mn: 0.8 to 2 mass%, Zn: 0.35 to 3 mass%-, and the balance being Al and impurities, and the inner skin layer is made of an Al-Si series brazing material.

A method of manufacturing a heat exchanger according to the present invention has a structure as recited in the following Items [20] to [24].

[20] A method of manufacturing a heat exchanger comprising a plurality of flat tubes, fins disposed between the flat tubes, and a header connected to one ends of the flat tubes, the method comprising the steps of:
preparing a heat exchanger tubular member produced by forming a clad member having a core material, an outer skin layer provided on one surface side of a core material, and an inner skin layer provided on the other side thereof via an intermediate layer into a tubular configuration with the outer skin layer facing outward as at least one of the flat tube and the header, wherein the core material of the clad member is made of an aluminum alloy comprising Mn: 0.8 to 2 mass%, Mg: 0.2 to 1. 5 mass%, and the balance being Al and impurities, the outer skin layer is made of an aluminum alloy comprising Zn: 0.01 to 4 mass%, and the balance being Al and impurities, the intermediate layer is made of an aluminum alloy comprising Mn: 0.8 to 2 mass%, Zn: 0.35 to 3 mass%, and the balance being Al and impurities, and the inner skin layer is made of an Al-Si series brazing material; and brazing the flat tubes and the fins, and the flat tubes and the header using fluoride series flux.

[21] The method of manufacturing a heat exchanger as recited in the aforementioned Item 20, wherein an application amount of the fluoride series flux to the flat tube is 2 g/m² or more.

[22] The method of manufacturing a heat exchanger as recited in the aforementioned Item 21, wherein the fluoride series flux is applied to an inner side of the flat tube so that an application amount thereof is greater than an application amount of the flux applied to an outer side of the flat tube.

[23] The method of manufacturing a heat exchanger as recited in the aforementioned Item 22, wherein an application amount of the fluoride series flux to the inner side of the flat tube is 3 to 30 g/m².

[24] The method of manufacturing a heat exchanger as recited in any one of the aforementioned Items 20 to 23, wherein an application amount of the fluoride series flux to the header is 4 g/m² or more.

### EFFECTS OF THE INVENTION

In the clad member according to the invention [1], the use of a Mg-containing aluminum alloy as the core material secures the strength, and the Zn added to the outer skin layer and the intermediate layer prevents diffusion of the Mg contained in the core material, thereby enhancing the brazability. Furthermore, the outer skin layer functions as a sacrifice corrosion layer, enhancing the corrosion resistance.

In the clad member according to the invention [2], especially the strength of the core material is high and therefore the clad member is excellent in strength.

In the clad member according to the invention [3], it is excellent especially in corrosion resistance due to the intergranular corrosion prevention effect by the Ti added to the core material.

In the clad member according to the invention [4], especially the strength of the intermediate layer is high, and therefore the clad member is excellent in strength.

In the clad member according to the invention [5], especially the strength of the intermediate layer is high and therefore the strength as the clad member is excellent.

In the clad member according to the invention [6], especially the sacrifice corrosion effect of the outer skin layer is excellent and therefore it is excellent in corrosion resistance.

In the clad member according to the invention [7], especially the Mg diffusion prevention effect of the intermediate layer is excellent, and therefore it is excellent in brazability.

In the clad member according to the invention [8], especially the Mg diffusion prevention effect and sacrifice corrosion effect of the intermediate layer is excellent, and therefore it is excellent in brazability and corrosion resistance.

In the clad member according to the invention [9], it is excellent in brazing material corrosion prevention effect by the intermediate layer.

In the tubular member for heat exchanges according to the invention [10], since any one of the clad members as recited in [1] to [9] is used, it is excellent in strength, brazability and corrosion resistance.

In the flat tube according to the invention [11], since the tubular member for heat exchanges as recited in [10] is used, it is excellent in strength, brazability and corrosion resistance.

In the flat tube according to the invention [12], excellent strength can be attained without deteriorating the brazing material corrosion prevention effect by the intermediate layer.

In the header according to the invention [13], since the tubular member for heat exchanges as recited in [10] is used, it is excellent in strength, brazability and corrosion resistance.

In the header according to the invention [14], especially it has excellent strength.

In the header according to the invention [15], since sufficient brazing material will be fed to the connecting portion, it is especially excellent in brazability.

In the method for manufacturing a clad sheet according to the invention [16], it is possible to manufacture the clad member as recited in [1] to [9].

In the method for manufacturing a clad sheet according to the invention [17] and [18], the diffusion of Mg during the intermediate annealing can be prevented, enabling production of a clad member especially excellent in brazability.

In the heat exchanger according to the invention [19], since the tubular member for heat exchanges as recited in [7] is used as a flat tube or a header, the flat tubes, the fins and the headers can be brazed preferably, and it is excellent in strength and corrosion resistance.

In the method for manufacturing a heat exchanger according to the invention [20], the heat exchanger as recited in [19] can be manufactured.

In the method for manufacturing a heat exchanger according to the invention [21], sufficient amount of flux can be fed to the brazing portion of the flat tube, enabling assured and preferable brazing.

In the method for manufacturing a heat exchanger according to each invention [22] and [23], preferable brazing can be assuredly performed at the inside of the flat tube.

In the method for manufacturing a heat exchanger according to the invention [24], sufficient amount of flux can be fed to the brazing portion of the header, thereby enabling assured and appropriate brazing.

### BRIEF DESCRIPTION OF DRAWINGS

Fig. 1 is a schematic cross-sectional view of a clad member according to the present invention.
Fig. 2 is a schematic view showing an example of a flat tube manufactured using the clad member shown in Fig. 1 and the partial enlarged cross-sectional view thereof.
Fig. 3 is a schematic view showing an example of another flat tube manufactured using the clad member shown in Fig. 1 and the enlarged partial cross-sectional view thereof.
Fig. 4A is a schematic view showing an example of still another flat tube manufactured using the clad member shown in Fig. 1 and the partial enlarged cross-sectional view thereof.
Fig. 4B is a schematic view showing an example of still yet another flat tube manufactured using the clad member shown in Fig. 1 and the partial enlarged cross-sectional view thereof.
Fig. 5 is a cross-sectional view showing an example of still further flat tube manufactured using the clad member shown in Fig. 1.
Fig. 6 shows a method for manufacturing a flat tube shown in Fig. 5.
Fig. 7 is a front view showing an example of a heat exchanger according to the present invention.
Fig. 8 is a partial schematic view showing the laminated state of the flat tubes and the fins in the heat exchanger shown in Fig. 7.
Fig. 9 is a perspective view of a header manufactured using the clad member shown in Fig. 1 and the partial enlarged cross-sectional view thereof

### DESCRIPTION OF REFERENCE NUMERALS

- 1: clad member
- 2, 3, 5, 7, 30: flat tube (tubular member for heat exchangers)
- 20: heat exchanger
- 21: outer fin (fin)
- 22: header (tubular member for heat exchangers)

### BEST MODE FOR CARRYING OUT THE INVENTION

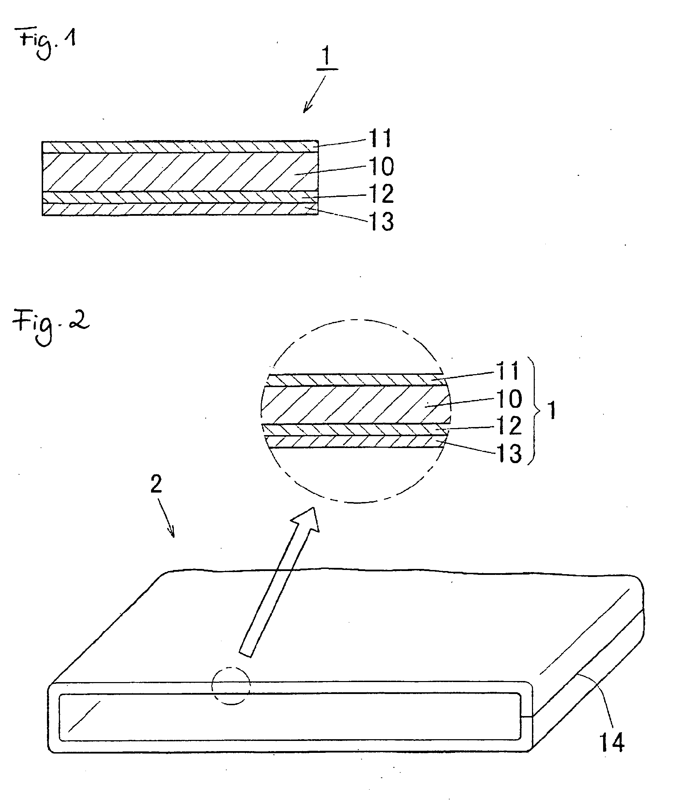

Fig. 1 shows a clad member according to the present invention, and Fig. 2 shows a flat tube manufactured using the clad member.

The clad member 12 is a four-layer structure brazing clad member having a core material 10, an outer skin layer 11 provided on one surface of the core material 10, and an inner skin layer 13 provided on the other surface of the core material 10 via an intermediate layer 12. The flat tube 2 is a member produced by forming the clad member 1 into a tubular configuration with the outer skin layer 11 facing outward.

The core material 10 of the clad member 1 is made of a Mg-containing aluminum alloy, securing the strength. The Zn added to the outer skin layer 11 and the intermediate layer 12 prevents the diffusion of Mg contained in the core material 10, resulting in excellent brazability. Furthermore, the outer skin layer 11 is excellent in corrosion resistance since it functions as a sacrifice corrosion layer.

The composition of the aluminum alloy constituting each layer of the clad member 1, and the significance and preferable concentration of each element in the alloy are as follows.

### [Core Material]

The core material 10 is constituted by an aluminum alloy (hereinafter referred to as "core alloy") comprising Mn: 0.8 to 2 mass%, Mg:0.2 to 1.5 mass%, and the balance being Al and impurities.

In the core alloy, Mn is an element which exerts an influence on strength. The Mn concentration should be 0.8 to 2 mass%. If the Mn concentration is less than 0.8 masses, the strength becomes insufficient. If it exceeds 2 mass%, rough intermetallic compounds will be generated, resulting in deteriorated workability. The preferable Mn concentration in the core alloy is 1 to 1.6 mass%. Mg is also an element which exerts an influence on strength, and the concentration should be 0.2 to 1.5 mass%. If the Mg concentration is less than 0.2 mass%, the strength becomes insufficient. If it exceeds 1.5 mass, the oxide film becomes hard, which makes it difficult to produce the clad member. The preferable Mg concentration is 0.3 to 1.2 mass%.

Cu is an element for enhancing strength, but an excess amount thereof may deteriorate corrosion resistance. Therefore, the Cu concentration is preferably 0.5 mass% or less, more preferably 0.2 mass% or less. The Cu concentration for attaining a strength improving effect is 0.03 mass% or more.

Zn is an element which exerts an influence on corrosion resistance. The Zn concentration exceeding 0.5 mass% may cause deterioration of corrosion resistance. Therefore, the Zn concentration is preferably 0.5 mass% or less, more preferably 0.3 mass% or less.

Ti is an element having an intergranular corrosion prevention effect. In a heat exchanger using CO₂ as a refrigerant, it is held at a high temperature of about 180 °C. Holding the constituent material thereof at such a high temperature for a long period of time causes precipitation of various elements at the grain boundaries, which in turn may cause intergranular corrosion. Therefore, in the case of using the clad material according to the present invention as the structural material of such a heat exchanger, adding Ti to the core material can prevent intergranular corrosion. The preferable Ti concentration is 0.03 to 0.25 mass%. The aforementioned effect cannot be sufficiently achieved by the Ti concentration of less than 0.03 mass%, but can be sufficiently achieved by the Ti concentration of 0.25 mass%. Thus, it is not preferable to add Ti so that the Ti concentration exceeds 0.25 mass% in terms of cost performance. It is more preferable that the Ti concentration is 0.05 to 0.2 mass%.

Fe and Si may deteriorate the corrosion resistance of the core material itself, and therefore the concentration of each element is preferably 0.2 mass% or less. It is more preferable that the Fe concentration and the Si concentration are each 0.15 mass% or less.

### [Outer Skin Layer]

The outer skin layer 11 is constituted by an aluminum alloy (hereinafter referred to as "outer skin layer alloy") comprising Zn: 0.01 to 4 mass%, and the balance being Al and impurities.

In the outer skin layer alloy, Zn is an element added to prevent the diffusion of Mg contained in the core material 10 and make a potential difference between the core material 10 and the outer skin layer 11 to cause the outer skin layer 11 to function as a sacrifice corrosion layer. The Zn concentration should be set to 0.01 to 4 mass%. If the Zn concentration is less than 0.01 mass%, the outer skin layer fails to function as a sacrifice corrosion layer. If it exceeds 4 mass%, the outer skin layer corrodes quickly, causing deteriorated long-term corrosion resistance. The preferable Zn concentration is 0.4 to 3 mass%.

Furthermore, in the outer skin layer alloy, other elements can be added or can be contained within a range which does not exert an influence on corrosion resistance. As to the following elements, however, it is preferably to limit the concentration in the outer skin layer.

In the outer skin layer alloy, adding Mn and Cu is limited. Each of Mn and Cu is an element which makes a potential difference between the core material 10 and the outer skin layer 11 to contribute the sacrifice corrosion effect of the outer skin layer 11, but excessively adding these elements may cause early corrosion of the outer skin layer 11. Therefore, it is preferable that the Mn is 0.1 mass% or less, more preferably 0.05 mass% or less in concentration. Furthermore, it is preferable that Cu is 0.2 mass% or less, more preferably 0.15 mass% or less in concentration.

Fe and Si may cause deterioration of the corrosion resistance of the outer skin layer itself. Therefore, it is preferable that Fe and Si are each 0.2 mass% or less in concentration. The more preferable Fe concentration and Si concentration are each 0.15 mass% or less.

### [Intermediate Layer]

The intermediate layer 12 is constituted by an aluminum alloy (hereinafter referred to as "intermediate layer alloy") comprising Mn: 0.8 to 2 mass%, Zn: 0.35 to 3 mass%, and the balance being Al and impurities.

In the intermediate alloy, Mn is an element which exerts an effect on strength, and the Mn concentration should be 0.8 to 2 mass%. Mn concentration of less than 0.8 mass% causes insufficient strength, and Mn concentration exceeding 2 mass% causes generation of rough intermetallic compounds, deteriorating workability. The preferable Mn concentration in the intermediate layer alloy is 1 to 1.6 mass%. Zn is an element which controls diffusion of Mg in the core material 10, and the Zn concentration should be 0.35 to 3 mass%. The Zn concentration of less than 0.35 mass% cannot be very effective to the Mg diffusion control effect. On the other hand, the Zn concentration exceeding 3 mass% may cause diffusion of Zn into the core material 10 to deteriorate corrosion resistance. The preferable Zn concentration is 0.5 to 2.5 mass%.

Furthermore, in the intermediate layer alloy, other elements can be added or can be contained within a range which does not exert an influence on corrosion resistance. As to the following elements, however, it is preferably to limit the concentration in the intermediate layer alloy.

In the intermediate layer alloy, Cu can be further added. Although Cu is an element which exerts an influence on strength, excessive amount of Cu may cause deterioration of corrosion resistance. Thus, it is preferable that the Cu concentration is 0.5 mass% or less, more preferably 0.03 mass% or less. The Cu concentration for attaining the strength enhancing effect is 0.15 mass% or more.

Furthermore, Fe can also be added. Fe is effective in improving the alloy strength and miniaturizing crystal grains. On the other hand, the intermediate layer 12 is required to stop the corrosion by the brazing material of the inner skin layer 13 to thereby prevent the invasion of corrosion into the core material 10. The larger crystal grains of the intermediate layer 12 are effective in corrosion prevention effect. A sufficiently thick intermediate layer 12 can effectively prevent the corrosion by the brazing material even if the crystal grain size is small. In the case of using the clad member as a tubular member, the total thickness of the clad member 1 will be often limited to secure the inner volume and the lightness of the tube, and therefore it is not preferable to prevent the corrosion by increasing the thickness of the intermediate layer 12. Under the circumstances, in the clad member for tubular members, in terms of securing both the strength and the corrosion prevention effect, it is preferable to control the average grain size so as to fall within the range of 20 to 300 µm. Fe for controlling the average grain size within the aforementioned range is preferably 0.3 mass% or less in concentration. The more preferable average grain size is 30 to 100 µm, and the more preferable Fe concentration is 0.03 to 0.2 mass%. On the other hand, in a header in which the inner volume is sufficiently large and a clad member 1 thicker than that of the tubular member is used, increasing the thickness of the intermediate layer 12 enables prevention of corrosion, which makes it possible to adjust the Fe concentration by giving greater importance to the improvement of strength. Therefore, in a clad member to be used as a tubular material, the Fe concentration in the intermediate layer alloy is preferably 0.3 to 0.8 mass%, more preferably 0.4 to 0.7 mass%. The average grain size is not specifically limited, but preferably 100 µm or less.

### [Inner Skin Layer]

The inner skin layer is constituted by an Al-Si series alloy brazing material (hereinafter referred to as "inner skin layer alloy").

The inner skin layer alloy is not specifically limited as along as it is an Al-Si series alloy, and can be exemplified by an Al-Si series alloy containing Si: 6 to 15 mass%. Concretely, JIS A4343 and JIS A4045 can be exemplified.

The thickness of each layer and/or the total thickness of the clad member 1 according to the present invention is not limited, and can be set arbitrarily.

For example, in cases where the clad member 1 is used as a material of a heat exchanger tubular member, the total thickness of the clad member 1 is preferably 100 to 2,000 µm. In the case of using the clad member 1 as a flat tube material, it is preferably 100 to 500 µm. In the case of using the clad member 1 as a material for a header, it is preferably 200 to 2,000 µm.

The thickness of the core material 10 is set so that required strength can be secured depending on the use. For example, in the case of using the clad member as a material of a heat exchanger tubular member, it is preferable that the thickness of the core material is 50 to 1, 900 µm. In the case of using the clad member as a material for a flat tube, the preferable thickness of the core material is 50 to 450 µm. In the case of using the clad member as a material for a header, the preferable thickness of the core material is 150 to 1,900 µm.

The thickness of the outer skin layer 11 is preferably 10 to 100 µm to attain the Mg diffusion prevention effect and the sacrifice corrosion effect. The thickness of less than 10 µm is poor in Mg diffusion prevention effect. Since the outer skin layer 11 is lower in strength than the core material 10, the thickness of the outer skin layer 11 exceeding 100 µm causes a relatively thin thickness of the core material 10, which may cause insufficient strength as a clad member 1. The preferable thickness of the outer skin layer 11 is 10 to 50 µm.

The thickness of the intermediate layer 12 is preferably 10 to 70 µm to attain the Mg diffusion prevention effect. The thickness of less than 10 µm is poor in Mg diffusion prevention effect. Since the intermediate skin layer 12 is lower in strength than the core material 10, the thickness of the intermediate layer 12 exceeding 70 µm causes a relatively thin thickness of the core material 10, which may cause insufficient strength as a clad member 1. The preferable thickness of the intermediate layer 12 is 10 to 50 µm.

The thickness of the inner skin layer 13 can be arbitrarily set depending on the use of the clad material 1 so that an amount of brazing material required for joining can be secured. For example, in the case of using the clad member 1 as a material for heat exchanger tubular member, the thickness of the inner skin layer 13 is preferably 10 to 300 µm. Especially, in the case of using the clad member as a material for a flat tubular member, the thickness of the inner skin layer is preferably 5 to 50 µm. Furthermore, in the case of using the clad member as a material for a header, the thickness of the inner skin layer is preferably 50 to 300 µm.

In the production method of the clad member 1 according to the present invention, the rolling temperatures are not limited. In an example of the production method, materials are disposed one on top of the other to form a four-layered material; they are subjected to hot clad-rolling; and the clad-rolled material is subjected to intermediate annealing at any point between rolling passes after the clad-rolling but before cold rolling, or between rolling passes after the clad-rolling to thereby obtain a desired thickness. The present invention does not regulate conditions of the clad-rolling and/or the cold rolling, and the necessity or conditions of the intermediate annealing. However, in order to control the diffusion of Mg in the core material 10 during the intermediate annealing, the intermediate annealing should not be performed at high temperatures, and is preferably performed at a temperature of 450 °C or below. Intermediate annealing performed at a temperature of below 390 °C easily causes a precipitation of elements, such as, e.g., Cu, at the grain boundaries and may cause deterioration of corrosion resistance, and therefore the intermediate annealing is preferably performed at a temperature of 390 °or above. The more preferable temperature of the intermediate annealing is 390 to 420 °C. Furthermore, the processing time of the intermediate annealing is not specifically limited, and can be arbitrarily set within the range capable of improving the workability and controlling the Mg diffusion. Concretely, it is preferable that the processing time of the intermediate annealing is 6 hours or less, more preferably 4 hours or less.

In an example shown in Fig. 2, the heat exchanger tubular member 2 according to the present invention is produced by forming the aforementioned plate-shaped clad member 1 into a tubular configuration with the outer skin layer 11 facing outward. The outer skin layer 11 functions as a sacrifice corrosion layer. As the heat exchanger tubular member, a flat tube and a header can be exemplified. The method for forming the clad member into a tubular member is not specifically limited, and can be a method in which the clad member is formed into a tubular configuration by a well-known method, such as, e.g., rolling forming and then the seam 14 is secured to obtain a tubular member. The seam 14 can be, for example, brazed using the Al-Si series alloy brazing material of the inner skin layer 13 constituting the clad member 1.

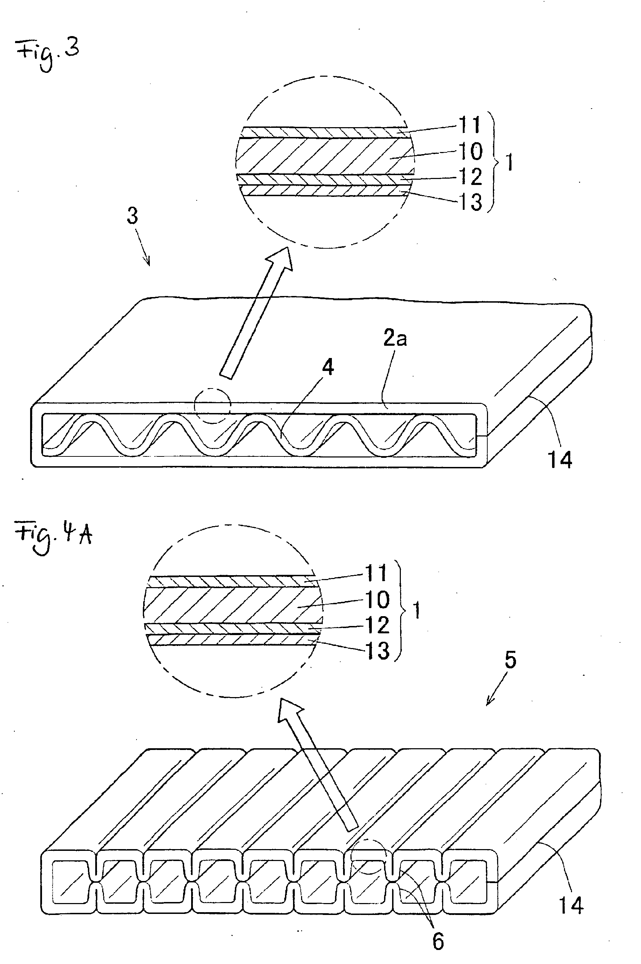

Furthermore, the flat tube is not limited to the flat tube 2 constituted only by a peripheral wall portion as shown in Fig. 2. Other examples of the flat tube are shown by Figs. 3, 4A, 4B and 5.

The flat tube 3 shown in Fig. 3 is manufactured by forming a main body portion 2a by a plate-like clad member 1 in the same manner as in the flat tube shown in Fig. 2, disposing an inner fin 4 separately produced in the main body portion 2a, thereafter brazing the main body portion 2a and the inner fin 4.

The flat tube 5 shown in Fig. 4A is a multi-passage tube manufactured by subjecting a plate-like clad member 1 to bending work to form a plurality of protrusions 6, forming it into a tubular configuration, and then brazing the opposed protrusions 6 and 6 to form partitioning walls.

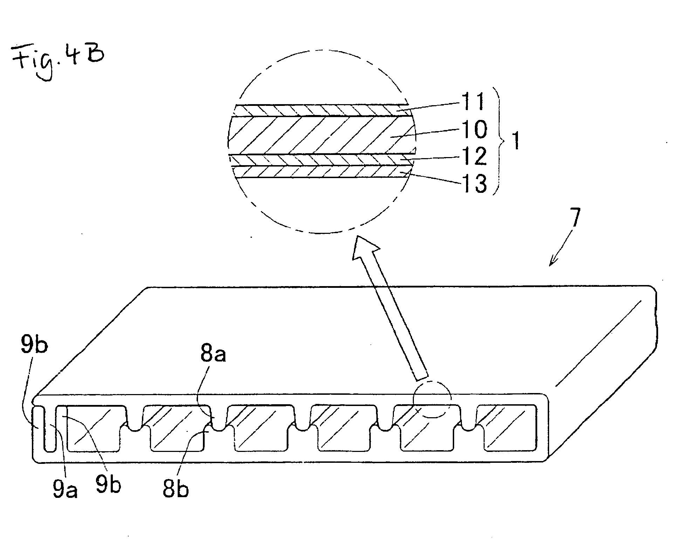

The flat tube 7 shown in Fig. 4B is also a multi-passage tube. One example of the production method is as follows. A clad member 1 as a starting material is formed to have protrusions 8a and receiving portions 8b each having a groove for fitting the protrusion 8a. Furthermore, one engaging protrusion 9a is formed at one end portion of the clad member1, and two engaging protrusions 9b and 9b are formed at the other end portion thereof. The clad member is bent so that the protrusions 8a engage with the grooves of the receiving portions 8b to thereby form partitioning walls in a tube and the engaging protrusions 9a and 9b formed at end portions are engaged, to thereby form a tubular configuration. Engaging the engaging protrusions 9a and 9b formed at the end portions extends the joint length in the cross-section of the tubular member, improving the joint strength.

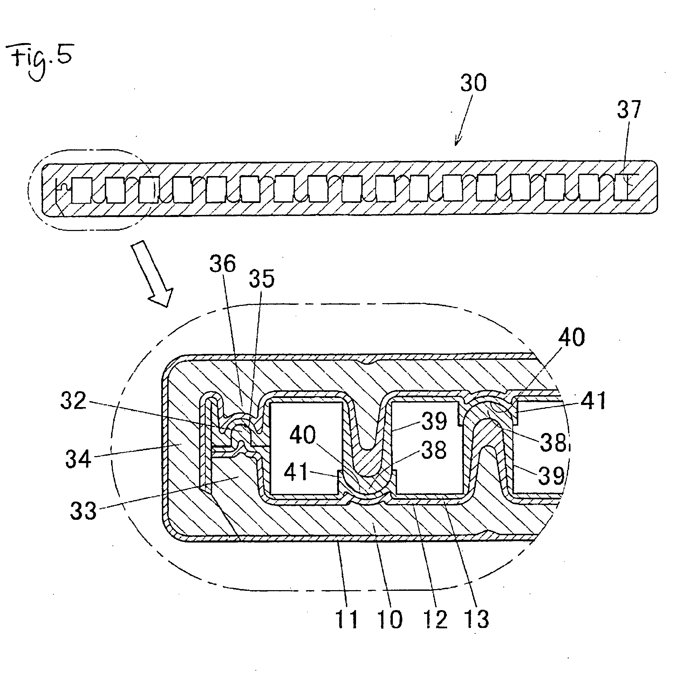

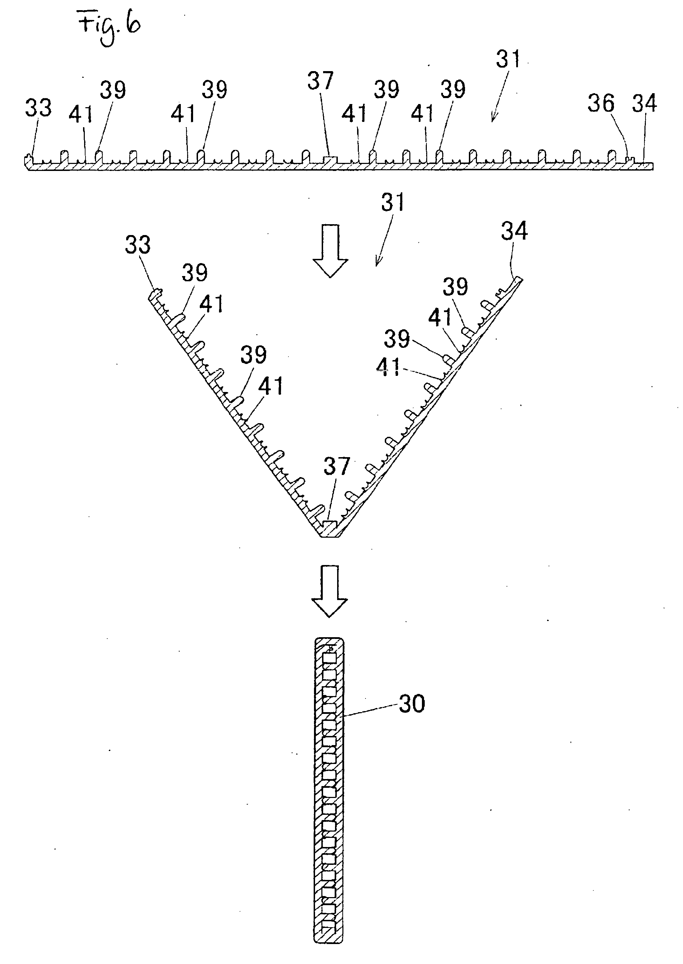

The flat tube 30 shown in Fig. 5 is a multi-passage tube having partitioning walls produced by working a clad member 1. In this flat tube, as shown in the cross-sectional view of Fig. 6, various protrusions 33, 36, 37, 39 and 41 for forming partitioning walls and side walls are formed at the side of the inner skin layer 13 of the clad member 1 by roll forming, to thereby obtain a tube forming material 31. The tube forming material 31 is bent at the lateral central portion thereof into a flat tubular configuration. The tube forming material 31 is provided, at its lateral one end portion, with an inner side wall forming protruded ledge 33 with a protrusion 32 at the tip end thereof. The tip end portion of the other end portion of the tube forming material is configured to constitute an outer side wall forming portion 34. At the basal end side of this outer side wall forming portion 34, an inner side wall forming protruded ledge 36 having a groove 35 at its tip end. At the lateral central portion of the tube forming material 31, a side wall forming protruded ledge 37 configured to constitute another side wall portion is provided. Between the inner side wall forming protruded ledges 33 and 36 and the side wall forming protruded ledge 37, partition forming protruded ledges 39 each having a protrusion 38 at its tip end and receiving portions 41 each having a groove 40 at its tip end are formed alternatively. The tube forming material 31 is bent around the side wall forming protruded ledge 37 into a hairpin-shaped configuration. The protrusions 38 of the partitioning wall forming protruded ledges 39 are fitted in the opposed dented grooves 35 of the opposed receiving portions 41, and the protruded portion 32 of the inner side wall forming protruded ledge 33 is fitted in the dented groove 35 of the other side inner side wall forming protruded ledge 36. Furthermore, the outer side wall forming portion 34 is inwardly bent to provisionally form a flat tube configuration. This provisionally fabricated flat tube is heated at a predetermined temperature to thereby braze the engaged inner side wall forming protruded ledge 33 and the outer side wall 34 and the engaged partitioning wall forming protruded ledges 39 and the receiving portions 41. Thus, a flat tube 30 having thick side walls and plurality of refrigerant passages can be produced.

In the aforementioned flat tubes 3, 5, 7 and 30, brazing the inner fin 4 and the main body portion, the protrusions 6, the protrusions 8a and the receiving portions 8b, the engaging protrusions 9a and 9b, the inner side wall forming protruded ledges 33 and 36 and the outer side wall 34, and the partitioning wall forming protruded ledges 39 and the receiving portions 41 can be preferably performed by an Al-Si series alloy brazing material constituting the inner skin layer 13 of the clad member 1.

The clad member according to the present invention is not limited to a plate-like member as shown in Fig. 1, and includes, for example, a tubular shaped member and a member having protrusions to be subjected to bending work to form a tube.

In the illustrated heat exchanger according to the present invention in which a plurality of flat tubes and fins interposed between the flat tubes are brazed, and the plurality of flat tubes and the headers to which end portions of the flat tubes are brazed, a tubular member produced by the clad member of the present invention is used as the aforementioned flat tube or a header, or both of them.

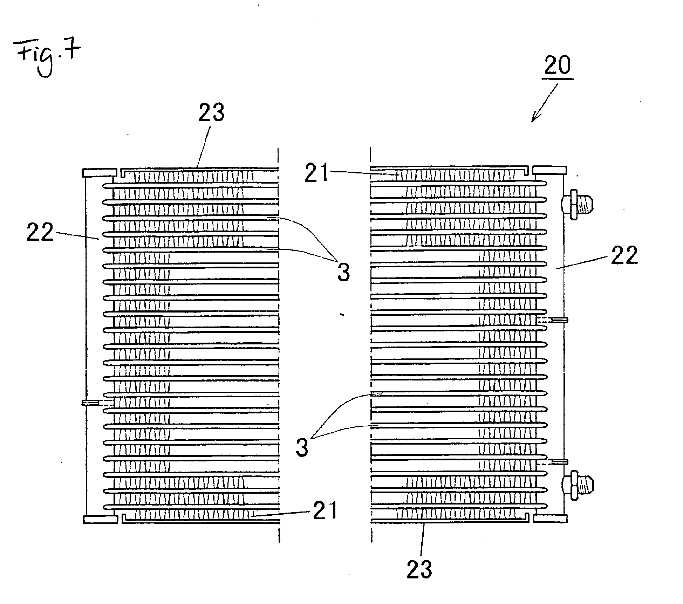

Hereinafter, the production method of a heat exchanger according to the present invention will be explained by exemplifying the case in which a heat exchanger 20 shown in Fig. 7 is produced using the flat tubes 3 shown in Fig. 3.

This heat exchanger 20 has a core portion including flat tubes 3, outer fins 21 and headers 22 integrally brazed in a state in which a plurality of flat tubes 3 are laminated with outer fins 21 interposed therebetween and both ends of the flat tube are fluidly communicated with the headers 22 and 22. In this figure, the reference numeral "23" denotes a side plate.

Initially, as a material of the flat tube 3 and the header, a clad member 1 having a predetermined thickness (see Fig. 1) is produced by superimposing a material of a core material 10, a material of an outer skin layer 11, a material of an intermediate layer 12 and a material of an inner skin layer 13 and subjecting it to hot clad-rolling and cold rolling including an intermediate annealing. The thickness of each layer in the clad member 1 is arbitrarily set depending on the intended purpose.

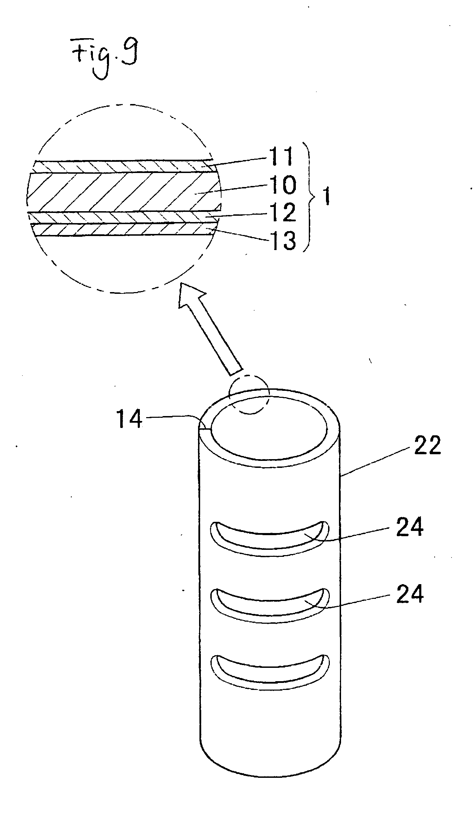

Next, this clad member 1 is roll-formed so that the outer skin layer 11 faces outward to produce a main body portion 2a. Then, a separately produced inner fin 4 is disposed in the main body portion 2a to provisionally form a flat tube 3 (See Fig. 3). On the other hand, as shown in Fig. 9, as to a header 22, a clad member 1 is formed into a tubular member with the outer skin layer 11 facing outward and flat apertures 24 for inserting the flat tubes 3 are formed.

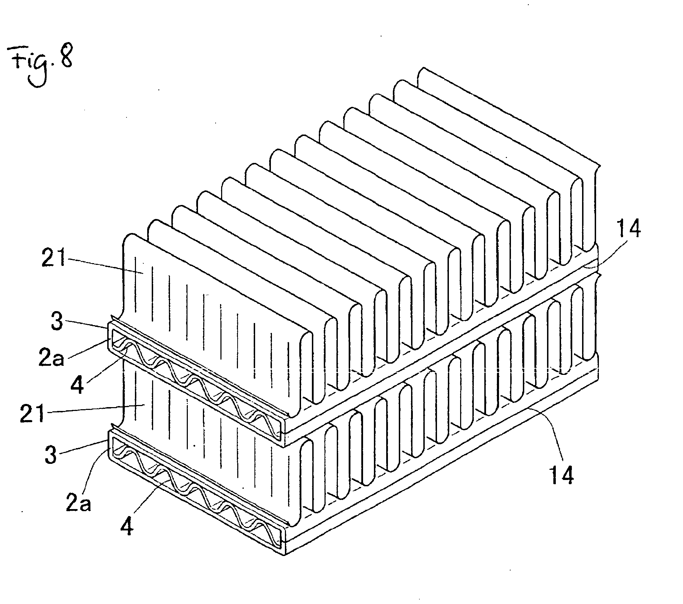

Then, the flat tubes 3 and outer fins 21 are stacked alternatively as shown in Figs. 7 and 8 and both ends of the flat tubes 3 are inserted into the flat apertures 24 formed in the headers 22 to provisionally fabricate. Fluoride series flux is applied to the flat tubes 3 and the headers 22 and then the provisionally fabricated assembly is heated in an inert gas atmosphere. This heating causes melting of the inner skin layer 13 of the clad member 1, thereby brazing the seams 14 of the flat tubes 3 and the headers 22 and also brazing the flat tubes 3 and the inner fins 4, and the header 22 and the flat tubes 3. By the brazing layer of the brazing sheet constituting the outer fin 21, the flat tubes 11 and the outer fins 21 are brazed. In this brazing, the diffusion of the Mg added to the core material alloy of the clad member 1 toward the brazing surface is controlled, resulting in excellent brazing of each portion without reacting with the fluoride series flux.

In the aforementioned brazing, the type of the fluoride series flux is not specifically limited, and can be, for example, a mixture of KF-AlF₃, or a mixture including at least one or more of KAlF₄, K₂AlF₅, K₃AlF₅, AlF₃, CsF, BiF₃, LiF, KZnF₃, and ZnF₂. Fluoride series flux can be preferably used. However, other fluxes such as chloride system flux can also be used.

The application amount of fluoride series flux to the flat tube 3 and the header 22 is preferably 2 g/m² or more to attain excellent brazing. The application amount of less than 2 g/m² may cause deterioration of brazability. The present invention does not regulate the upper limit of the application amount of fluoride series flux. It should be noted that the application amount exceeding 30 g/m² causes no improvement of the brazability and therefore it is not economical.

Furthermore, in a flat tube, replacements of atmosphere gases can be hardly occurred within the tube, resulting in poor surface activation by flux. Therefore, it is preferable that the flux application amount to the inner surface of the tube is larger than that to the outer surface of the tube. The application amount of the flux to the inner surface is preferably 3 g/m² or more, more preferably 3 to 30 g/m². Increasing the flux application amount to the tube inner surface enables excellent brazability in the flat tube 2 only having a main body portion as shown in Fig. 2, the flat tube 3 having inner fins 4 provided therein as shown in Fig. 3, and the flat tubes 5, 7 and 30 having a partitioning wall by protrusions 6, a partitioning wall by the protrusion 8a and the received portion 8b as shown in Fig. 4A, and the flat tubes 5, 7 and 30 having partitioning walls formed by protruded ledges 39 and receiving portions 41 as shown in Fig. 5.

The flux application amount to the header is preferably greater than that to the flat tube because of the following reasons. The header is attached by a member, such as, e.g., a bracket. The clearance between the header and the bracket, etc. is large, which requires a large amount of flux to supply sufficient amount of flux to the joining portion. Concretely, the flux application amount to the header is preferably 4 g/m² or more.

The flux application method is not specifically limited, and can be any well-known method, such as, e.g., an immersion application method or a spray application method. In the case of increasing the application amount on the inner surface of the flat tube, the application amount differentiation can be attained by executing the application to the inner surface and that to the outer surface at different steps. For example, in the case of manufacturing the illustrated heat exchanger, after applying flux to the side of the inner skin layer 13, the clad member 1 is formed into a tubular main body portion 2a and an inner fin 4 is disposed therein, and then flux is applied to the side of the outer skin layer 11 in a state in which the main body portion 2a and the inner fin 4 are fabricated, or after fabricating the flat tubes 3 and the outer fines 21 in a stacked manner, flux is applied thereto. In the case of the flat tube 5, 7 and 30 shown in Figs, 4A, 4B and 5, respectively, after applying flux to the side of the inner skin layer 13 of the clad member 1, protrusions 6 and 8a forming partitioning walls and various protrusions 32 to 41 forming partitioning walls and side walls are formed and then the clad member is formed into a provisional tubular member. Thereafter, flux is applied to the outer side of the flat tube 5, 7 or 30. Alternatively, after forming protrusions 6 and 8a or various protrusions 32 to 41 and applying flux, the clad member is formed into a provisional tubular member, and then flux is applied to the outside of the flat tube 5, 7 or 30.

### EXAMPLE

As examples of the present invention, clad materials preferably used as flat tubes for heat exchangers and clad members preferably used as headers for heat exchangers were produced, then flat tubes and headers were produced. Brazing tests were executed.

In each brazing test, as a non-corrosive fluoride series flux, a KAIF ₄ suspension of a predetermined concentration was used. As the outer fin 21 to be alternatively laminated with the flat tubes 3, a brazing fin (thickness: 80 µm, clad ratio: 10% per each side) in which a brazing layer made of an Al-8 mass% Si alloy was cladded on both sides of the core material made of an aluminum alloy in which Zn was added to JIS A3203 was used. As the inner fin 4 to be disposed in the flat tube 3, a wavy bare fin 100 µm in thickness made of JIS A3003 was used (see Fig. 3).

### (1) Flat Tube

### [Production of Clad Member]

As the flat tube material, clad members shown in Tables 1 and 2 were prepared.

As the core alloy constituting the core material of the clad member, the outer skin layer alloy constituting the outer skin layer and the intermediate alloy constituting the intermediate layer, aluminum alloys comprising the elements of the concentrations shown in each Table and the balance being Al and impurities were used. As the inner skin layer alloy constituting the inner skin layer, an Al-Si alloy brazing material containing Si: 9 mass% was used.

In Examples 1 to 20 and Comparative Example 2 in Table 1 and Examples 21 to 34 and Comparative Examples 22 and 23 in Table 2, a four-layered clad member 1 comprising an outer skin layer 11, a core member 10, and intermediate layer 12 and an inner skin layer 13 was produced. In producing the clad member 1, layer materials were superimposed and then subjected to clad-rolling, and then intermediate annealing for holding it for 2 hours at a temperature of 420 °C was executed. Furthermore, it was cold-rolled into a thickness (total thickness) of 300 µm. The thickness of the external skin layer 11 and that of the intermediate skin layer 12 of the produced clad member 11 are shown in Table 1. All of the inner skin layer 13 were set to 25 µm in thickness. Accordingly, the thickness of the core material in each clad member 1 can be calculated as: [300 µm - (thickness of the outer skin layer + thickness of the intermediate layer + 25 µm)].

Furthermore, in Comparative Example 1 in Table 1, and Comparative Example 21 in Table 2, clad materials were produced in the same method as mentioned above except that it was constituted by a three-layered structure consisting of an outer skin layer, a core material and an inner skin layer without forming an intermediate layer.

### [Tensile Strength of Clad member, Grain Size of Intermediate Layer, Corrosion to Intermediate Layer]

As to each of the clad members in Tables 1 and 2, after executing heat treatment corresponding to brazing (5 minutes heating at 600 °C in a nitrogen gas atmosphere), the tensile strength at a room temperature (25 °C) and a high temperature (180 °C) and the average grain size of the intermediate layer 12 were measured. These measured results were shown in Tables 1 and 2.

Furthermore, corrosion to the intermediate layer 12 by Si contained in the inner skin layer alloy (brazing material) was observed, but no corrosion was observed in all of the clad members.

### [Production of Flat Tube and Brazability]

Flat tubes 3 shown in Fig. 3 were produced using each clad member and the brazing tests of the flat tube 3 and the outer fins 21 were performed.

In Examples 1 to 20 and Comparative Examples 1 and 2 in Table 1, each clad member 1 was formed into a tubular main body portion 2a by roll forming so that the outer skin layer 11 faces outward, and an inner fin 4 was disposed in the main body portion 2a to provisionally form a flat tube 3. The provisionally formed flat tubes 3 and the outer fins 21 were arranged alternatively to provisionally fabricate as shown in Fig. 8. Next, this provisional fabrication was immersed in a flux suspension of a predetermined concentration and dried to thereby apply the same amount of flux to the inner surface and the outer surface of the flat tube 3. The flux application amount in each provisional assembly is shown in Table 1. The provisional assembly was heated at a temperature of 600 °C in a nitrogen gas atmosphere for 5 minutes to braze the seam 14 of the flat tube 3 and also braze the main body portion 2a of the flat tube 3 and the inner fin 4, and the flat tube 3 and the outer fin 21.

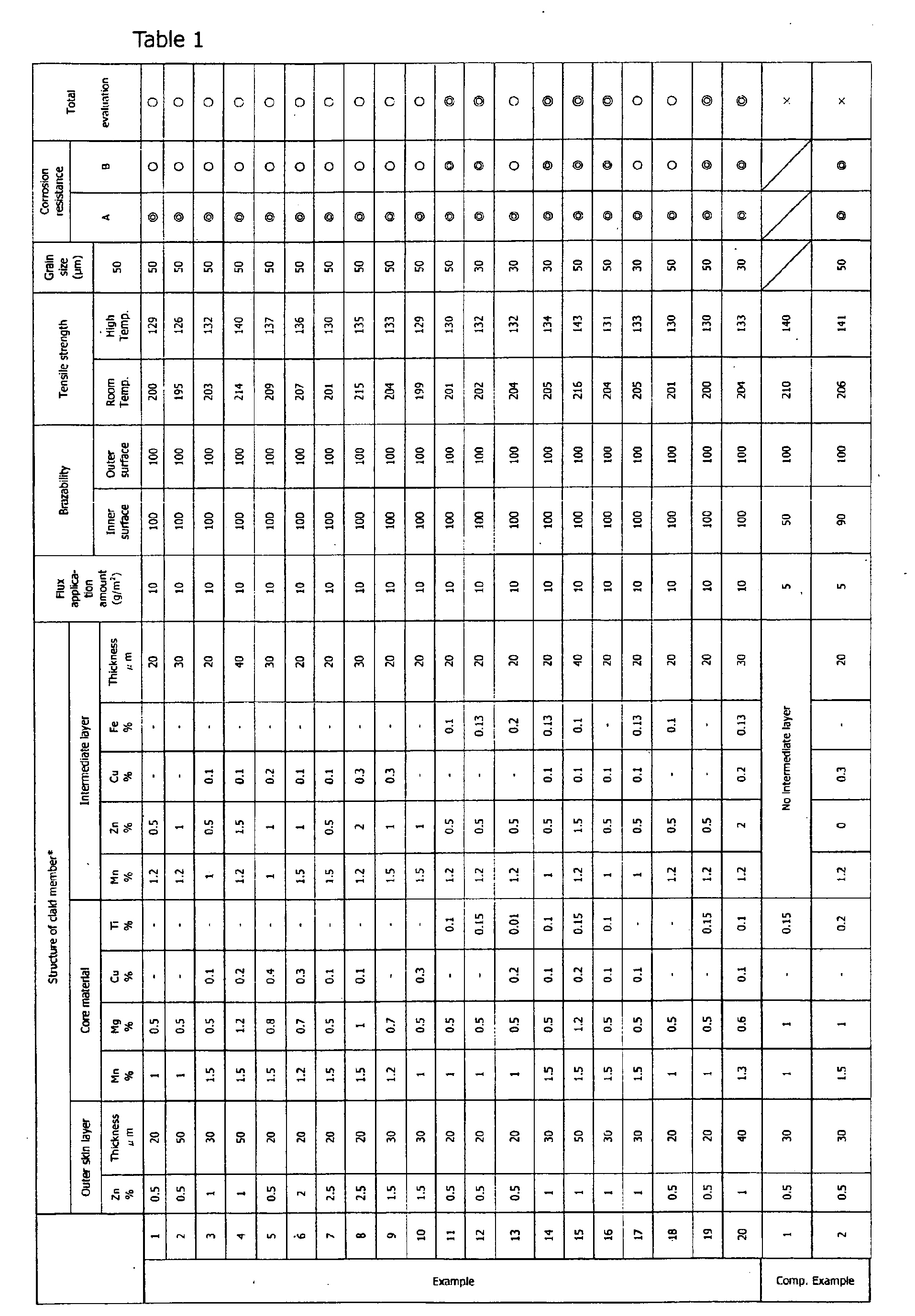

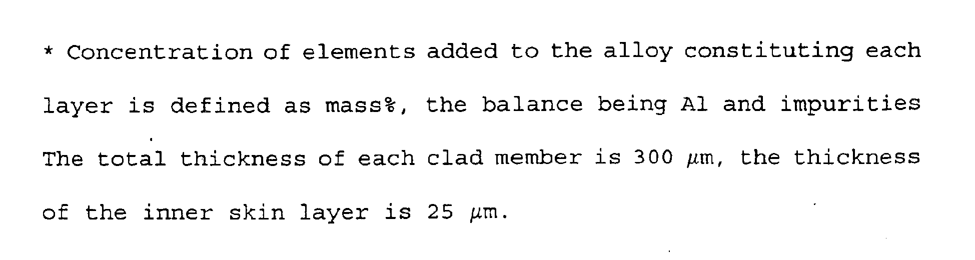

In Examples 21 to 34 and Comparative Examples 21 to 23 in Table 2, initially, flux in the amount shown in Table 2 was applied to the side of the inner skin layer 13 of each clad member 1 and then dried. Thereafter, the clad member 1 is roll-formed into a tubular main body portion 2a with the outer skin layer 11 facing outward and an inner fin 3 was disposed in the main body portion 2a to provisionally assemble a flat tube 3. After this provisional assembling, flux in the amount shown in Table 2 was applied to the side of the outer skin layer 11 of the flat tube 3. Next, as shown in Fig. 8, the flat tubes 3 and the outer fins 21 were arranged alternatively to provisionally assemble them. Then, this provisional assembly was heated at a temperature of 600 °C in a nitrogen gas atmosphere for 5 minutes to braze the seams of the flat tubes 3 and also braze the main body portions 2a of the flat tube and the inner fin 4, and the flat tubes 3 and the outer fins 21.

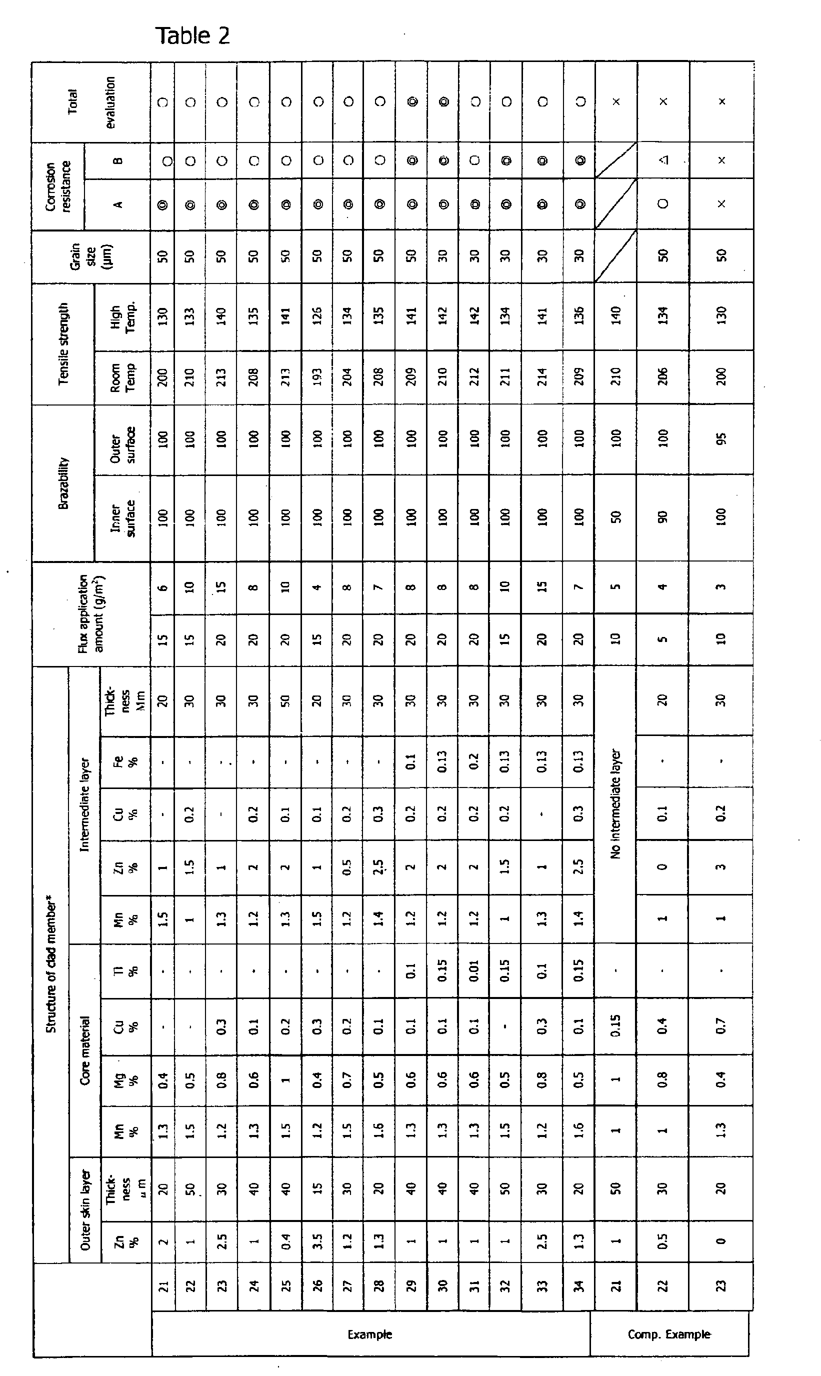

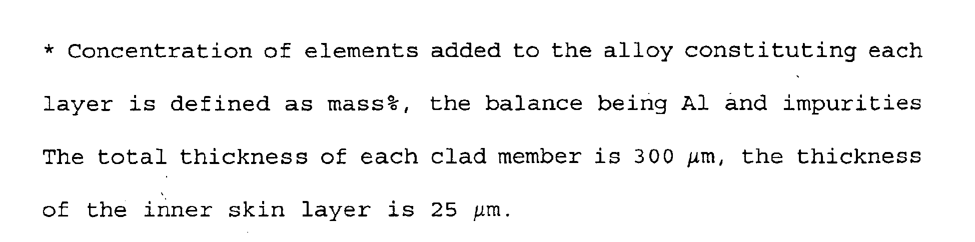

As to each brazed product, the joint ratio % between the main body portion 2a of the flat tube and the inner fin 4 and the joint ratio % between the outer surface of the flat tube 3 and the outer fin 21 were checked and the brazability was evaluated based on the joint ratio. The evaluation results are shown in Tables 1 and 2.

### [Corrosion Resistance of Brazed Products]

As to each brazed product, the intergranular corrosion sensitivity of the flat tube was investigated by the following search method A to evaluate the corrosion resistance. Furthermore, in order to investigate the Ti addition effects of the core alloy, in the investigation method B, conditions which easily cause intergranular corrosion than in the investigation method A were set to severely investigate the intergranular corrosion sensitivity. In the brazed products of Comparative Examples 1 and 21, the corrosion resistance could not be evaluated because of poor brazability. These evaluation results are shown in Tables 1 and 2.

### (Investigation Method A of Intergranular Corrosion Sensitivity)

Brazed products were subjected to SWAAT corrosion test defined by ASTM-G85-A3 to evaluate the corrosion resistance by the following standards from the corrosion status after the test. The test conditions: corrosion test liquid in which acetic acid was added to artificial seawater defined by ASTM D1141 so that pH was adjusted to pH3; one cycle of spraying the corrosion test liquid for 0.5 hour-moistening with the corrosion test liquid for 1.5 hours was repeated for 480 hours.
⊚: No intergranular corrosion occurred
○: Slight intergranular corrosion occurred on the surface, but the corrosion depth was not so deep. Therefore, the corrosion resistance as a heat exchanger was satisfied.

### (Investigation Method B of Intergranular Corrosion Sensitivity)

After holding at 180 °C for 24 hours, brazed products were subjected to SWAAT corrosion test under the same condition as in the aforementioned inventigation method A to evaluate the corrosion resistance by the following standards from the corrosion status after the test. The 180 °C high temperature holding was performed by assuming the use environment of a heat exchanger using CO₂ refrigerant.
⊚: No intergranular corrosion occurred on the surface
○: Almost no intergranular corrosion occurred
△: Intergranular corrosion was not remarkable

From the results shown in Tables 1 and 2, it was confirmed that the clad member of each Example in which an intermediate layer of a certain thickness was formed between the core material and the inner skin layer had strength equivalent to the strength of the clad member of Comparative Examples 1 and 21 having the same thickness but having no intermediate layer. Adding a certain amount of Fe to the intermediate layer could improve the strength while preventing the corrosion by the brazing material.

In the clad member of each Example having an outer skin layer to which a certain amount of Zn was added and an intermediate layer, the brazability of the inner surface and the outer surface was excellent. To the contrary, in Comparative Examples 1 and 21 having no intermediate layer and Comparative Examples 2, 22 and 23 in which Zn concentration of the outer skin layer or the intermediate layer were beyond the range of the present invention, the brazability was poor. Especially, in Comparative Examples 1 and 21 having no intermediate layer, the brazability was extremely poor.

It was also confirmed that the clad member of each Example had excellent corrosion resistance. Especially, the clad member in which a certain amount of Ti was added to the core alloy had excellent brazability.

### [Brazability of Brazed Product Due to Intermediate Annealing]

In producing the four-layered clad member 1 of Examples 24 and 29 shown in Table 2, clad members of Examples 51 to 60 shown in Table 3 were produced by changing only intermediate annealing conditions.

Using each produced clad member, flat tubes 3 were produced in the same manner as in Examples 21 to 34. The flat tubes 3 and outer fins 21 were arranged alternatively and subjected to a brazing test. The flux application amount was set to 20 g/m² at the inner side and 8 g/m² at the outer side in the same manner as in Example 14. The product was heated at a temperature of 600 °C in a nitrogen gas atmosphere for 5 minutes.

As to the brazed products, the brazability was evaluated based on the joint rate between the flat tube 3 and the inner fin 4 and the outer fin 21. Also the corrosion resistance was evaluated by conducting the intergranular corrosion sensitivity of the flat tube by the aforementioned two investigation methods A and B. The evaluation results are shown in Table 3.

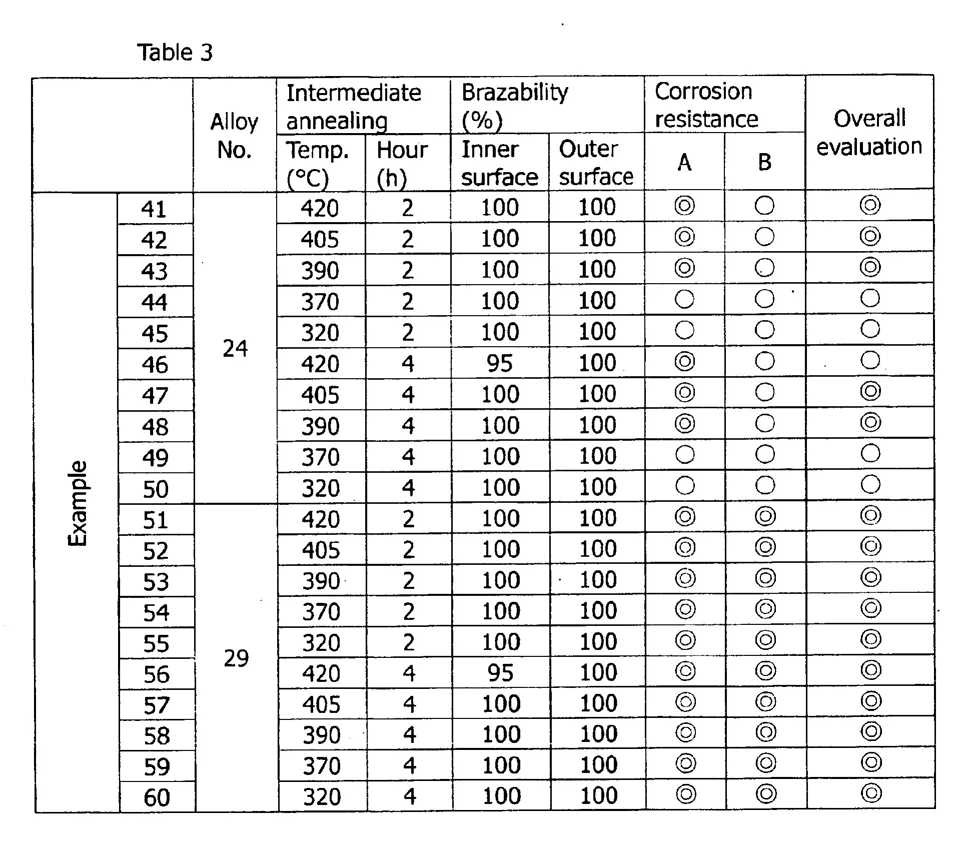

From the results in Table 3, it was confirmed that the intermediate annealing under the recommended conditions of the present invention results in excellent corrosion resistance.

### <Header>

### [Production of Clad Member]

In producing a header for heat exchangers using a clad member 1 according to the present invention, it is preferable to use a clad member having a thicker total thickness thicker than the total thickness of the aforementioned tube. Increasing the total thickness enables not only the core material 10 but also the intermediate layer 12 to increase the thickness. Therefore, even if the grain size was decreased by increasing the Fe concentration for the purpose of increasing the strength of the intermediate layer 12, or the strength of the clad member, corrosion of the inner skin layer 13 by the brazing material can be sufficiently prevented.

As shown in Examples 61 to 64 in Table 4, clad members in which the total thickness, each layer thickness and the Fe concentration of the intermediate layer alloy were set to values appropriate to a header were produced. In the same manner as in the aforementioned clad member for tubes, these clad members were produced by arranging each layer materials one on top of the other, subjecting them to hot clad-rolling, then to intermediate annealing for holding them at a temperature of 420 °C for 2 hours, and then to cold rolling to obtain a thickness (total thickness) shown in Table 4.

Each layer alloy composition of the clad member of Example 61 was the same as that of Example 11 shown in Table 1 except for the Fe concentration in the intermediate layer alloy. Each layer alloy composition of the clad member of Examples 62 to 64 was the same as that of Example 30 shown in Table 2 except for the Fe concentration in the intermediate layer alloy.

### [Tensile Strength of Clad Material, Grain Size of Intermediate Layer, Corrosion to Intermediate Layer]

In the same manner as in the clad member for tubes, after executing heat treatment corresponding to brazing (5 minutes heating at a temperature of 600 °C in a nitrogen gas atmosphere), the tensile strength at a room temperature (25 °C) and a high temperature (180 °C) and the average grain size of the intermediate layer 12 were measured.

Furthermore, the corrosion to the intermediate layer 12 by Si in the inner skin layer (brazing layer) was observed to evaluate based on the following standards.
⊚: Almost no corrosion to the intermediate layer by Si occurred
○: Slight corrosion to the intermediate layer by Si occurred
△: Corrosion to the intermediate layer by Si did not reach the core material
These evaluation results are shown in Table 4.

### [Production of Header and Corrosion Resistance]

Using each clad member, a header 22 as shown in Fig. 9 was produced. Flat tubes 3 and outer fins 21 were assembled to the header 22 to execute a brazing test.

The header 22 was produced by applying flux in the amount shown in Table 4 to the side of the inner skin layer 13 of the clad member 1, drying it, subjecting it to roll forming to provisionally form a tubular member with the outer skin layer facing outward and then forming flat apertures 24 for inserting flat tubes 3.

The flat tube 3 to be assembled to the header 22 was produced by applying flux in the amount of 10 g/m² to the side of the inner skin layer 13 of the clad member 1, drying it, forming into a tubular main body portion 2a by roll forming with the outer skin layer 11 facing outward; disposing an inner fin 4 within the main body portion 2a to fabricate a provisional flat tube 3. After this provisional fabrication, flux in the amount of 10 g/m² was applied to the side of the outer skin layer 11 of the flat tube 3. Next, the flat tubes 3 and the outer fins 21 are arranged alternatively, and both ends of the flat tube 3 were inserted in the flat apertures 24 formed in the headers 22 to obtain a provisional assembly.

The provisional assembly was heated at a temperature or 600 °C in a nitrogen atmosphere for 5 minutes to braze the seams 14 of the flat tubes 30, the main body portion 2a of the flat tube 3 and the inner fin 4, the flat tube 3 and the outer fin 21, the seams 14 of the headers 22, and the headers 22 and the flat tubes 3.

As to the brazed products, the brazability was evaluated based on the joint ratio % between the header 22 and the outer surface of the flat tubes 3. Also the corrosion resistance was evaluated by conducting the intergranular corrosion sensitivity of the header by the aforementioned two investigation methods A and B. The evaluation results are shown in Table 4.

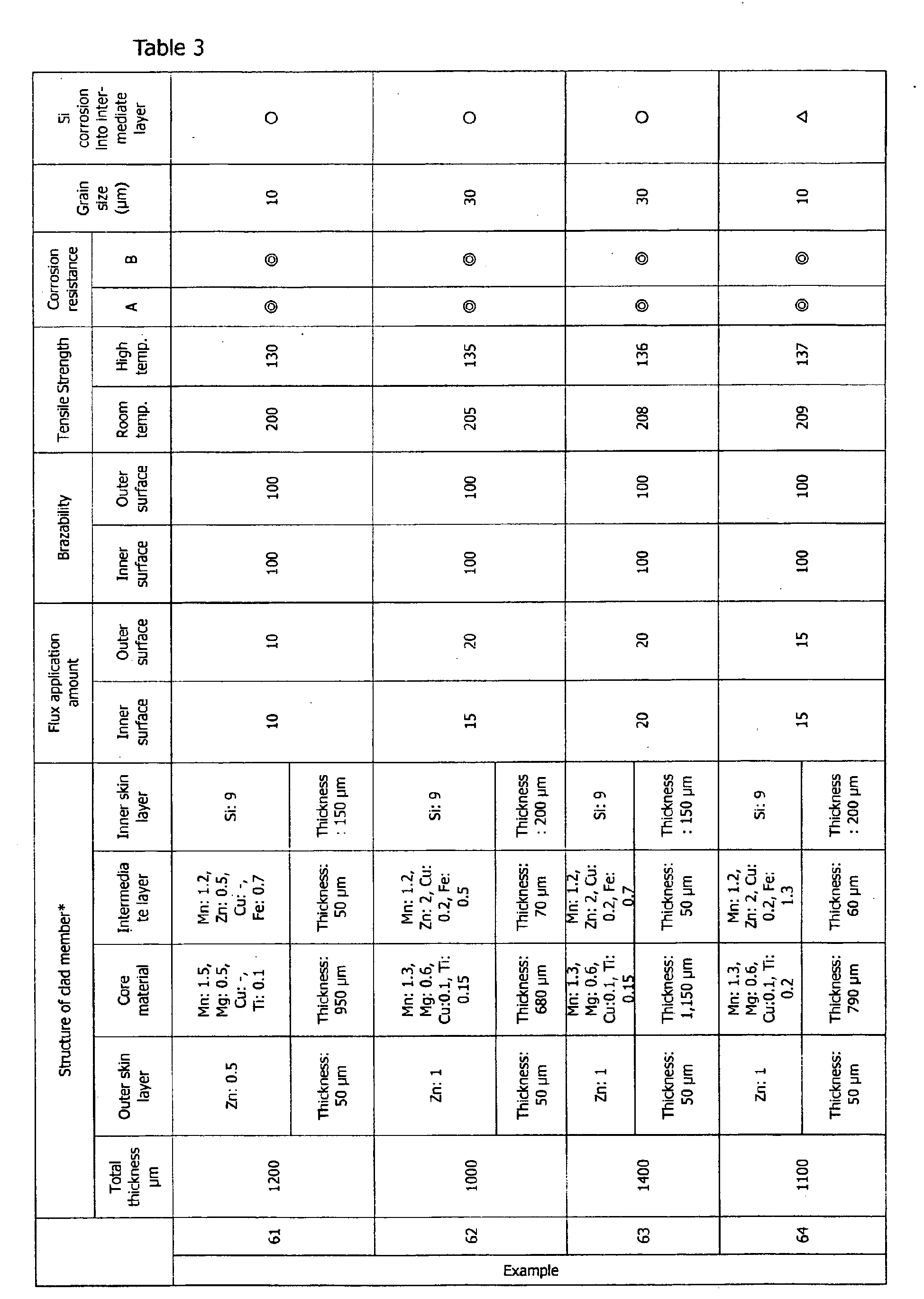

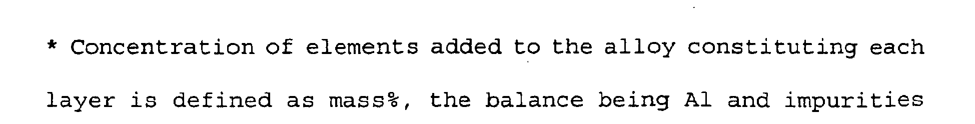

From Table 4, even in the case where the clad member is used as a header, it was confirmed that excellent brazability, strength and corrosion resistance can be obtained. Furthermore, it was confirmed that corrosion of the intermediate layer 12 by Si contained in the brazing material by adding Fe to the intermediate layer alloy, but the corrosion was limited in the intermediate layer and did not reach the core material 10. Accordingly, in the clad member in which the intermediate layer was increased in thickness, a strength increasing effect due to the relatively high Fe concentration was attained.

In the present invention, it should be noted that the total thickness of the clad member, the thickness of each layer, the alloy composition of each layer and the usage of the clad member are not limited to the aforementioned Examples.

This application claims priority to Japanese Patent Application No. 2005-250844 filed on August 31, 2005, the entire disclosure of which is incorporated herein by reference in its entirety.

It should be understood that the terms and expressions used herein are used for explanation and have no intention to be used to construe in a limited manner, do not eliminate any equivalents of features shown and mentioned herein, and allow various modifications falling within the claimed scope of the present invention.

### INDUSTRIAL APPLICABILITY

The clad member according to the present invention is excellent in brazability and corrosion resistance, and therefore can be utilized as constituent materials for various heat exchanger tubular members.

## Claims

1. A clad member comprising a core material, an outer skin layer provided on one surface of the core material, and an inner skin layer provide on the other surface thereof via an intermediate layer,
wherein the core material is made of an aluminum alloy comprising Mn: 0.8 to 2 mass%, Mg: 0.2 to 1. 5 mass%, and the balance being Al and impurities,
wherein the outer skin layer is made of an aluminum alloy comprising Zn: 0.01 to 4 mass%, and the balance being Al and impurities,
wherein the intermediate layer is made of an aluminum alloy comprising Mn: 0.8 to 2 mass%, Zn: 0.35 to 3 mass%, and the balance being Al and impurities, and
wherein the inner skin layer is made of an Al-Si series brazing material.

2. The clad member as recited in claim 1, wherein the aluminum alloy constituting the core material further comprises Cu: 0.5 mass% or less.

3. The clad member as recited in claim 1, wherein the aluminum alloy constituting the core material further comprises Ti: 0.03 to 0.25 mass% or less.

4. The clad member as recited in claim 1, wherein the aluminum alloy constituting the intermediate layer further comprises Cu: 0.5 mass% or less.

5. The clad member as recited in claim 1, wherein the aluminum alloy constituting the intermediate layer further comprises Fe: 0.8 mass% or less.

6. The clad member as recited in claim 1, wherein the aluminum alloy constituting the outer skin layer is 0.1 mass% or less in Mn concentration and 0.2 mass% or less in Cu concentration.

7. The clad member as recited in any one of claims 1 to 6, wherein the intermediate layer is 10 to 70 µm in thickness.

8. The clad member as recited in any one of claims 1 to 6, wherein the outer skin layer is 10 to 100 µm in thickness.

9. The clad member as recited in any one of claims 1 to 6, wherein the intermediate layer after brazing is 20 to 300 µm in average grain size.

10. A tubular member for heat exchangers produced by forming a clad member comprising a core material, an outer skin layer provided on one surface of the core material, and an inner skin layer provide on the other surface thereof via an intermediate layer into a tubular configuration with the outer skin layer facing outward,
wherein the core material is made of an aluminum alloy comprising Mn: 0.8 to 2 mass%, Mg: 0. 2 to 1.5 mass%, and the balance being Al and impurities,
wherein the outer skin layer is made of an aluminum alloy comprising Zn: 0.01 to 4 mass%, and the balance being Al and impurities,
wherein the intermediate layer is made of an aluminum alloy comprising Mn: 0.8 to 2 mass%, Zn: 0.35 to 3 mass%, and the balance being Al and impurities, and
wherein the inner skin layer is made of an Al-Si series brazing material.

11. A flat tube for heat exchangers produced by forming a clad member comprising a core material, an outer skin layer provided on one surface of the core material, and an inner skin layer provide on the other surface thereof via an intermediate layer into a tubular configuration with the outer skin layer facing outward,
wherein the core material is made of an aluminum alloy comprising Mn: 0.8 to 2 mass%, Mg: 0. 2 to 1.5 mass%, and the balance being Al and impurities,
wherein the outer skin layer is made of an aluminum alloy comprising Zn: 0.01 to 4 mass%, and the balance being Al and impurities,
wherein the intermediate layer is made of an aluminum alloy comprising Mn: 0.8 to 2 mass%, Zn: 0.35 to 3 mass%, and the balance being Al and impurities, and
wherein the inner skin layer is made of an Al-Si series brazing material.

12. The flat tube as recited in claim 11, wherein the aluminum alloy constituting the intermediate layer of the clad member is 0.3 mass% or less in Fe concentration.

13. A header for heat exchangers produced by forming a clad member comprising a core material, an outer skin layer provided on one surface of the core material, and an inner skin layer provide on the other surface thereof via an intermediate layer into a tubular configuration with the outer skin layer facing outward,
wherein the core material is made of an aluminum alloy comprising Mn: 0.8 to 2 mass%, Mg: 0.2 to 1.5 mass%, and the balance being Al and impurities,
wherein the outer skin layer is made of an aluminum alloy comprising Zn: 0.01 to 4 mass%, and the balance being Al and impurities,
wherein the intermediate layer is made of an aluminum alloy comprising Mn: 0.8 to 2 mass%, Zn: 0.35 to 3 mass%, and the balance being Al and impurities, and
wherein the inner skin layer is made of an Al-Si series brazing material.

14. The header as recited in claim 13, wherein the aluminum alloy constituting the intermediate layer of the clad member is 0.3 to 0.8 mass% in Fe concentration.

15. The header as recited in claim 13 or 14, wherein the inner skin layer of the clad member is 70 to 300 µm in thickness.

16. A method of manufacturing a clad member, the steps comprising:
disposing an outer skin layer made of an aluminum alloy comprising Zn: 0.01 to 4 mass%, and the balance being Al and impurities on one surface of a core material made of an aluminum alloy comprising Mn: 0.8 to 2 mass%, Mg: 0.2 to 1.5 mass%, and the balance being Al and impurities;
disposing an inner skin layer made of an Al-Si series brazing material on the other surface of the core material via an intermediate layer made of an aluminum alloy comprising Mn: 0.8 to 2 mass%, Zn: 0.35 to 3 mass%, and the balance being Al and impurities;
subjecting the core material, the inner skin layer, the outer skin layer and the intermediate layer to hot clad-rolling to obtain an intermediate material; and
subjecting the intermediate material to intermediate annealing at any point between rolling passes after the clad-rolling but before cold rolling, or between cold rolling after the clad-rolling.

17. The method of manufacturing a clad member as recited in claim 16, wherein the intermediate annealing is executed at a temperature of 450 °C or below.

18. The method of manufacturing a clad member as recited in claim 16 or 17, wherein the intermediate annealing is executed for 6 hours or less.

19. A heat exchanger in which a plurality of flat tubes and fins disposed between the flat tubes are brazed and the plurality of flat tubes and a header connected to one ends of the flat tubes are brazed,
wherein at least one of the flat tube and the header is a heat exchanger tubular member produced by forming a clad member having an outer skin layer provided on one surface side of a core material and an inner skin layer provided on the other side thereof via an intermediate layer into a tubular configuration with the outer skin layer facing outward, and
wherein the core material of the clad member is made of an aluminum alloy comprising Mn: 0.8 to 2 mass%, Mg: 0.2 to 1.5 mass%, and the balance being Al and impurities, the outer skin layer is made of an aluminum alloy comprising Zn: 0.01 to 4 mass%, and the balance being Al and impurities, the intermediate layer is made of an aluminum alloy comprising Mn: 0.8 to 2 mass%, Zn: 0.35 to 3 mass%, and the balance being Al and impurities, and the inner skin layer is made of an Al-Si series brazing material.

20. A method of manufacturing a heat exchanger comprising a plurality of flat tubes, fins disposed between the flat tubes, and a header connected to one ends of the flat tubes, the method comprising the steps of:
preparing a heat exchanger tubular member produced by forming a clad member having a core material, an outer skin layer provided on one surface side of a core material, and an inner skin layer provided on the other side thereof via an intermediate layer into a tubular configuration with the outer skin layer facing outward as at least one of the flat tube and the header, wherein the core material of the clad member is made of an aluminum alloy comprising Mn: 0.8 to 2 mass%, Mg: 0. 2 to 1. 5 mass%, and the balance being Al and impurities, the outer skin layer is made of an aluminum alloy comprising Zn: 0.01 to 4 mass%, and the balance being Al and impurities, the intermediate layer is made of an aluminum alloy comprising Mn: 0.8 to 2 mass%, Zn: 0.35 to 3 mass%, and the balance being Al and impurities, and the inner skin layer is made of an Al-Si series brazing material; and
brazing the flat tubes and the fins, and the flat tubes and the header using fluoride series flux.

21. The method of manufacturing a heat exchanger as recited in claim 20, wherein an application amount of the fluoride series flux to the flat tube is 2 g/m² or more.

22. The method of manufacturing a heat exchanger as recited in claim 21, wherein the fluoride series flux is applied to an inner side of the flat tube so that an application amount thereof is greater than an application amount of the flux applied to an outer side of the flat tube.

23. The method of manufacturing a heat exchanger as recited in claim 22, wherein an application amount of the fluoride series flux to the inner side of the flat tube is 3 to 30 g/m².

24. The method of manufacturing a heat exchanger as recited in any one of claims 20 to 23, wherein an application amount of the fluoride series flux to the header is 4 g/m² or more.

## Patentansprüche

1. Ein plattiertes Element, das ein Kernmaterial, eine Außenhaut-Schicht, die auf einer Oberfläche des Kernmaterials bereitgestellt ist, und eine Innenhaut-Schicht, die auf der anderen Oberfläche davon über eine Zwischenschicht bereitgestellt ist, umfasst
wobei das Kernmaterial aus einer Aluminiumlegierung hergestellt ist, die 0.8 bis 2 Massen-% Mn, 0.2 bis 1.5 Massen-% Mg umfasst und der Rest Al und Verunreinigungen ist,
wobei die Außenhaut-Schicht aus einer Aluminiumlegierung hergestellt ist, die 0.01 bis 4 Massen-% Zn umfasst und der Rest Al und Verunreinigungen ist,
wobei die Zwischenschicht aus einer Aluminiumlegierung hergestellt ist, die 0.8 bis 2 Massen-% Mn, 0.35 bis 3 Massen-% Zn umfasst und der Rest Al und Verunreinigungen ist, und
wobei die Innenhaut-Schicht aus einem Lötmaterial einer Al-Si Serie hergestellt ist.

2. Das plattierte Element wie in Anspruch 1 angegeben, wobei die Aluminiumlegierung, die das Kernmaterial bildet, weiter 0.5 Massen-% Cu oder weniger umfasst.

3. Das plattierte Element wie in Anspruch 1 angegeben, wobei die Aluminiumlegierung, die das Kernmaterial bildet, weiter 0.03 bis 0.25 Massen-% Ti oder weniger umfasst.

4. Das plattierte Element wie in Anspruch 1 angegeben, wobei die Aluminiumlegierung, die die Zwischenschicht bildet, weiter 0.5 Massen-% Cu oder weniger umfasst.

5. Das plattierte Element wie in Anspruch 1 angegeben, wobei die Aluminiumlegierung, die die Zwischenschicht bildet, weiter 0.8 Massen-% Fe oder weniger umfasst.

6. Das plattiertes Element wie in Anspruch 1 angegeben, wobei die Aluminiumlegierung, die die Außenhaut-Schicht bildet, eine Mn-Konzentration von 0.1 Massen-% oder weniger hat und eine Cu-Konzentration von 0.2 Massen-% oder weniger hat.

7. Das plattierte Element wie in einem der Ansprüche 1 bis 6 angegeben, wobei die Zwischenschicht 10 bis 70 µm dick ist.

8. Das plattierte Element wie in einem der Ansprüche 1 bis 6 angegeben, wobei die Außenhaut-Schicht 10 bis 100 µm dick ist.

9. Das plattierte Element wie in einem der Ansprüche 1 bis 6 angegeben, wobei die Zwischenschicht nach dem Löten eine durchschnittliche Korngröße von 20 bis 300 µm hat.

10. Ein Röhrenelement für Wärmetauscher, das hergestellt wird, indem ein plattiertes Element, das ein Kernmaterial, eine Außenhaut-Schicht, die auf einer Oberfläche des Kernmaterials bereitgestellt ist, und eine Innenhaut-Schicht, die auf der anderen Oberfläche davon über eine Zwischenschicht bereitgestellt ist, umfasst, in eine Röhrenkonfiguration geformt wird, wobei die Außenhaut-Schicht nach außen zeigt,
wobei das Kernmaterial aus einer Aluminiumlegierung hergestellt ist, die 0.8 bis 2 Massen-% Mn, 0.2 bis 1.5 Massen-% Mg umfasst und der Rest Al und Verunreinigungen ist,
wobei die Außenhaut-Schicht aus einer Aluminiumlegierung hergestellt ist, die 0.01 bis 4 Massen-% Zn umfasst und der Rest Al und Verunreinigungen ist,
wobei die Zwischenschicht aus einer Aluminiumlegierung hergestellt ist, die 0.8 bis 2 Massen-% Mn, 0.35 bis 3 Massen-% Zn umfasst und der Rest Al und Verunreinigungen ist, und
wobei die Innenhaut-Schicht aus einem Lötmaterial einer Al-Si Serie hergestellt ist.

11. Ein Flachrohr für Wärmetauscher, das hergestellt wird, indem eine plattiertes Element, das ein Kernmaterial, eine Außenhaut-Schicht, die auf einer Oberfläche des Kernmaterials bereitgestellt ist, und eine Innenhaut-Schicht, die auf der anderen Oberfläche davon über eine Zwischenschicht bereitgestellt ist, umfasst, in eine Röhrenkonfiguration geformt wird, wobei die Außenhaut-Schicht nach außen zeigt,
wobei das Kernmaterial aus einer Aluminiumlegierung hergestellt ist, die 0.8 bis 2 Massen-% Mn, 0.2 bis 1.5 Massen-% Mg umfasst und der Rest Al und Verunreinigungen ist,
wobei die Außenhaut-Schicht aus einer Aluminiumlegierung hergestellt ist, die 0.01 bis 4 Massen-% Zn umfasst und der Rest Al und Verunreinigungen ist,
wobei die Zwischenschicht aus einer Aluminiumlegierung hergestellt ist, die 0.8 bis 2 Massen-% Mn, 0.35 bis 3 Massen-% Zn umfasst und der Rest Al und Verunreinigungen ist, und
wobei die Innenhaut-Schicht aus einem Lötmaterial einer Al-Si Serie hergestellt ist.

12. Das Flachrohr wie in Anspruch 11 angegeben, wobei die Aluminiumlegierung, die die Zwischenschicht des plattierten Elements bildet, eine Fe Konzentration von 0.3 Massen-% oder weniger hat.

13. Ein Kopf für Wärmetauscher, der hergestellt wird, indem ein plattiertes Element, das ein Kernmaterial, eine Außenhaut-Schicht, die auf einer Oberfläche des Kernmaterials bereitgestellt ist, und eine Innenhaut-Schicht, die auf der anderen Oberfläche davon über eine Zwischenschicht bereitgestellt ist, umfasst, in eine Röhrenkonfiguration geformt wird, wobei die Außenhaut-Schicht nach außen zeigt,
wobei das Kernmaterial aus einer Aluminiumlegierung hergestellt ist, die 0.8 bis 2 Massen-% Mn, 0.2 bis 1.5 Massen-% Mg umfasst und der Rest Al und Verunreinigungen ist,
wobei die Außenhaut-Schicht aus einer Aluminiumlegierung hergestellt ist, die 0.01 bis 4 Massen-% Zn umfasst und der Rest Al und Verunreinigungen ist,
wobei die Zwischenschicht aus einer Aluminiumlegierung hergestellt ist, die 0.8 bis 2 Massen-% Mn, 0.35 bis 3 Massen-% Zn umfasst und der Rest Al und Verunreinigungen ist, und
wobei die Innenhaut-Schicht aus einem Lötmaterial einer Al-Si Serie hergestellt ist.

14. Der Kopf wie in Anspruch 13 angegeben, wobei die Aluminiumlegierung, die die Zwischenschicht des plattierten Elements bildet, eine Fe Konzentration von 0.3 bis 0.8 Massen-% hat.

15. Der Kopf wie in Anspruch 13 oder 14 angegeben, wobei die Innenhaut-Schicht des plattierten Elements 70 bis 300 µm dick ist.

16. Ein Verfahren zur Herstellung eines plattierten Elements, wobei die Schritte umfassen:
Anordnen einer Außenhaut-Schicht, die aus einer Aluminiumlegierung hergestellt ist, die 0.01 bis 4 Massen-% Zn umfasst und der Rest Al und Verunreinigungen ist, auf einer Oberfläche eines Kernmaterials, das aus einer Aluminiumlegierung hergestellt ist, die 0.8 bis 2 Massen-% Mn, 0.2 bis 1.5 Massen-% Mg umfasst und der Rest Al und Verunreinigungen ist;
Anordnen einer Innenhaut-Schicht, die aus einem Lötmaterial einer Al-Si Serie hergestellt ist, auf der anderen Oberfläche des Kernmaterials über eine Zwischenschicht, die aus einer Aluminiumlegierung hergestellt ist, die 0.8 bis 2 Massen-% Mn, 0.35 bis 3 Massen-% Zn umfasst und der Rest Al und Verunreinigungen ist;
Unterziehen des Kernmaterials, der Innenhaut-Schicht, der Außenhaut-Schicht und der Zwischenschicht einer Heiß-Walzplattierung, um ein Zwischenmaterial zu erhalten; und
Unterziehen des Zwischenmaterials einem Zwischenglühen an jedem Punkt zwischen Walzdurchläufen nach dem Walzplattieren aber vor dem Kaltwalzen oder zwischen Kaltwalzen nach dem Walzplattieren.

17. Das Verfahren zur Herstellung eines plattierten Elements wie in Anspruch 16 angegeben, wobei das Zwischenglühen bei einer Temperatur von 450 °C oder niedriger ausgeführt wird.

18. Das Verfahren zur Herstellung eines plattierten Elements wie in Anspruch 16 oder 17 angegeben, wobei das Zwischenglühen für 6 Stunden oder weniger ausgeführt wird.

19. Ein Wärmetauscher, bei dem eine Vielzahl von Flachrohren und Rippen, die zwischen den Flachrohren angeordnet sind, gelötet sind und bei dem die Vielzahl von Flachrohren und ein Kopf, der mit einem Ende der Flachrohre verbunden ist, gelötet sind,
wobei mindestens eines der Flachrohre und des Kopfes ein Röhrenelement des Wärmetauschers ist, das hergestellt wird, indem ein plattiertes Element mit einer Außenhaut-Schicht, die auf einer Oberflächenseite eines Kernmaterials bereitgestellt ist, und eine Innenhaut-Schicht, die auf der anderen Seite davon über eine Zwischenschicht bereitgestellt ist, in eine Röhrenkonfiguration geformt wird, wobei die Außenhaut-Schicht nach Außen zeigt, und
wobei das Kernmaterial des plattierten Elements aus einer Aluminiumlegierung hergestellt ist, die 0.8 bis 2 Massen-% Mn, 0.2 bis 1.5 Massen-% Mg umfasst und der Rest Al und Verunreinigungen ist, die Außenhaut-Schicht aus einer Aluminiumlegierung hergestellt ist, die 0.01 bis 4 Massen-% Zn umfasst und der Rest Al und Verunreinigungen ist, die Zwischenschicht aus einer Aluminiumlegierung hergestellt ist, die 0.8 bis 2 Massen-% Mn, 0.35 bis 3 Massen-% Zn umfasst und der Rest Al und Verunreinigungen ist, und die Innenhaut-Schicht aus einem Lötmaterial einer Al-Si Serie hergestellt ist.

20. Ein Verfahren zur Herstellung eines Wärmetauschers, der eine Vielzahl von Flachrohren, Rippen, die zwischen den Flachrohren angeordnet sind, und einen Kopf, der mit einem Ende der Flachrohre verbunden ist, umfasst, wobei das Verfahren die Schritte umfasst:
Herstellen eines Röhrenelements eines Wärmetauschers, das hergestellt wird, indem ein plattiertes Element mit einem Kernmaterial, einer Außenhaut-Schicht, die auf einer Oberflächenseite eines Kernmaterials bereitgestellt ist, und eine Innenhaut-Schicht, die auf der anderen Seite davon über eine Zwischenschicht bereitgestellt ist, in eine Röhrenkonfiguration geformt wird, wobei die Außenhaut-Schicht nach Außen zeigt, als mindestens eines des Flachrohrs und des Kopfs, wobei das Kernmaterial des plattierten Elements aus einer Aluminiumlegierung hergestellt ist, die 0.8 bis 2 Massen-% Mn, 0.2 bis 1.5 Massen-% Mg umfasst und der Rest Al und Verunreinigungen ist, die Außenhaut-Schicht aus einer Aluminiumlegierung hergestellt ist, die 0.01 bis 4 Massen-% Zn umfasst und der Rest Al und Verunreinigungen ist, die Zwischenschicht aus einer Aluminiumlegierung hergestellt ist, die 0.8 bis 2 Massen-% Mn, 0.35 bis 3 Massen-% Zn umfasst und der Rest Al und Verunreinigungen ist, und die Innenhaut-Schicht aus einem Lötmaterial einer Al-Si Serie hergestellt ist; und
Löten der Flachrohre und der Rippen und der Flachrohre und des Kopfs unter Verwendung eines Fluoridserienflussmittels.

21. Das Verfahren zur Herstellung eines Wärmetauschers wie in Anspruch 20 angegeben, wobei eine Anwendungsmenge des Fluoridserienflussmittels für das Flachrohr 2 g/m² oder mehr ist.

22. Das Verfahren zur Herstellung eines Wärmetauschers wie in Anspruch 21 angegeben, wobei das Fluoridserienflussmittel auf einer Innenseite des Flachrohrs angewendet wird, so dass eine Anwendungsmenge davon größer ist als eine Anwendungsmenge des Flussmittels, das auf einer Außenseite des Flachrohrs angewendet wird.

23. Das Verfahren zur Herstellung eines Wärmetauschers wie in Anspruch 22 angegeben, wobei eine Anwendungsmenge des Fluoridserienflussmittels auf der Innenseite des Flachrohrs 3 bis 30 g/m² ist.

24. Das Verfahren zur Herstellung eines Wärmetauschers wie in einem der Ansprüche 20 bis 23 angegeben, wobei eine Anwendungsmenge des Fluoridserienflussmittels auf den Kopf 4 g/m² oder mehr ist.

## Revendications

1. Elément plaqué comprenant un matériau central, une couche de revêtement externe aménagée sur une surface du matériau central et une couche de revêtement interne aménagée sur son autre surface via une couche intermédiaire,
dans lequel le matériau central est fabriqué en un alliage d'aluminium comprenant du Mn : 0,8 à 2 % en masse, du Mg : 0,2 à 1,5 % en masse, le restant étant de l'Al et des impuretés,
dans lequel la couche de revêtement externe est fabriquée en un alliage d'aluminium comprenant du Zn : 0,01 à 4 % en masse, le restant étant de l'Al et des impuretés,
dans lequel la couche intermédiaire est fabriquée en un alliage d'aluminium comprenant du Mn : 0,8 à 2 % en masse, du Zn : 0,35 à 3 % en masse, le restant étant de l'Al et des impuretés, et
dans lequel la couche de revêtement interne est fabriquée en matériau de brasage de la série Al-Si.

2. Elément plaqué selon la revendication 1, dans lequel l'alliage d'aluminium constituant le matériau central comprend en outre du Cu : 0,5 % en masse ou moins.

3. Elément plaqué selon la revendication 1, dans lequel l'alliage d'aluminium constituant le matériau central comprend en outre du Ti : 0,03 à 0,25 % en masse ou moins.

4. Elément plaqué selon la revendication 1, dans lequel l'alliage d'aluminium constituant la couche intermédiaire comprend en outre du Cu : 0,5 % en masse ou moins.

5. Elément plaqué selon la revendication 1, dans lequel l'alliage d'aluminium constituant la couche intermédiaire comprend en outre du Fe : 0,8 % en masse ou moins.

6. Elément plaqué selon la revendication 1, dans lequel l'alliage d'aluminium constituant la couche de revêtement externe présente une concentration de Mn de 0,1 % en masse ou moins et une concentration de Cu de 0,2 % en masse ou moins.

7. Elément plaqué selon l'une quelconque des revendications 1 à 6, dans lequel la couche intermédiaire a 10 à 70 µm d'épaisseur.

8. Elément plaqué selon l'une quelconque des revendications 1 à 6, dans lequel la couche de revêtement externe a 10 à 100 µm d'épaisseur.

9. Elément plaqué selon l'une quelconque des revendications 1 à 6, dans lequel la couche intermédiaire après brasage a une granulométrie moyenne de 20 à 300 µm.

10. Elément tubulaire pour échangeurs thermiques produit en formant un élément plaqué comprenant un matériau central, une couche de revêtement externe aménagée sur une surface du matériau central et une couche de revêtement interne aménagée sur son autre surface via une couche intermédiaire en une configuration tubulaire avec la couche de revêtement externe tournée vers l'extérieur,
dans lequel le matériau central est fabriqué en un alliage d'aluminium comprenant du Mn : 0,8 à 2 % en masse, du Mg : 0,2 à 1,5 % en masse, le restant étant de l'Al et des impuretés,
dans lequel la couche de revêtement externe est fabriquée en un alliage d'aluminium comprenant du Zn : 0,01 à 4 % en masse, le restant étant de l'Al et des impuretés,
dans lequel la couche intermédiaire est fabriquée en un alliage d'aluminium comprenant du Mn : 0,8 à 2 % en masse, du Zn : 0,35 à 3 % en masse, le restant étant de l'Al et des impuretés, et
dans lequel la couche de revêtement interne est fabriquée en matériau de brasage de la série Al-Si.

11. Tube plat pour échangeurs produit par formation d'un élément plaqué comprenant un matériau central, une couche de revêtement externe aménagée sur une surface du matériau central et une couche de revêtement interne aménagée sur son autre surface via une couche intermédiaire en une configuration tubulaire avec la couche de revêtement externe tournée vers l'extérieur,
dans lequel le matériau central est fabriqué en un alliage d'aluminium comprenant du Mn : 0,8 à 2 % en masse, du Mg : 0,2 à 1,5 % en masse, le restant étant de l'Al et des impuretés,
dans lequel la couche de revêtement externe est fabriquée en un alliage d'aluminium comprenant du Zn : 0,01 à 4 % en masse, le restant étant de l'Al et des impuretés,
dans lequel la couche intermédiaire est fabriquée en un alliage d'aluminium comprenant du Mn : 0,8 à 2 % en masse, du Zn : 0,35 à 3 % en masse, le restant étant de l'Al et des impuretés, et
dans lequel la couche de revêtement interne est fabriquée en matériau de brasage de la série Al-Si.

12. Tube plat selon la revendication 11, dans lequel l'alliage d'aluminium constituant la couche intermédiaire de l'élément plaqué présente une concentration de Fe de 0,3 % en masse ou moins.

13. Collecteur pour échangeurs thermiques produit en formant un élément plaqué comprenant un matériau central, une couche de revêtement externe aménagée sur une surface du matériau central et une couche de revêtement interne ménagée sur son autre surface via une couche intermédiaire en une configuration tubulaire avec la couche de revêtement externe tournée vers l'extérieur,
dans lequel le matériau central est fabriqué en un alliage d'aluminium comprenant du Mn : 0,8 à 2 % en masse, du Mg : 0,2 à 1,5 % en masse, le restant étant de l'Al et des impuretés,
dans lequel la couche de revêtement externe est fabriquée en un alliage d'aluminium comprenant du Zn : 0,01 à 4 % en masse, le restant étant de l'Al et des impuretés,
dans lequel la couche intermédiaire est fabriquée en un alliage d'aluminium comprenant du Mn : 0,8 à 2 % en masse, du Zn : 0,35 à 3 % en masse, le restant étant de l'Al et des impuretés, et
dans lequel la couche de revêtement interne est fabriquée en matériau de brasage de la série Al-Si.

14. Collecteur selon la revendication 13, dans lequel l'alliage d'aluminium constituant la couche intermédiaire de l'élément plaqué est de 0,3 à 0,8 % en masse en concentration en Fe.

15. Collecteur selon la revendication 13 ou 14, dans lequel la couche de revêtement interne de l'élément plaqué a une épaisseur de 70 à 300 µm.

16. Procédé de fabrication d'un élément plaqué dont les étapes consistent à :
disposer une couche de revêtement externe fabriquée en un alliage d'aluminium comprenant du Zn : 0,01 à 4 % en masse, le restant étant de l'AI et des impuretés, sur une surface d'un matériau central fabriqué en un alliage d'aluminium comprenant du Mn : 0,8 à 2 % en masse, du Mg : 0,2 à 1,5 % en masse, le restant étant de l'Al et des impuretés ;
disposer une couche de revêtement interne fabriquée dans un matériau de brasage de la série Al-Si sur l'autre surface du matériau central via une couche intermédiaire fabriquée en un alliage d'aluminium comprenant du Mn : 0,8 à 2 % en masse, du Zn : 0,35 à 3 % en masse, le restant étant de l'Al et des impuretés ;
soumettre le matériau central, la couche de revêtement interne, la couche de revêtement externe et la couche intermédiaire à un plaquage par laminage à chaud afin d'obtenir un matériau intermédiaire ; et
soumettre le matériau intermédiaire à un recuit intermédiaire en un point quelconque entre les passes de laminage après le plaquage par laminage, mais avant le laminage à froid, ou au cours du laminage à froid après plaquage par laminage.

17. Procédé de fabrication d'un élément plaqué selon la revendication 16, dans lequel le recuit intermédiaire est effectué à une température de 450 °C ou moins.

18. Procédé de fabrication d'un élément plaqué selon les revendications 16 ou 17, dans lequel le recuit intermédiaire est effectué pendant 6 heures ou moins.

19. Echangeur thermique, dans lequel une pluralité de tubes plats et d'ailettes disposées entre les tubes plats sont soumis à un brasage et la pluralité de tubes plats et un collecteur raccordé à une des extrémités des tubes plats sont soumis à un brasage,
dans lequel au moins un élément choisi parmi le tube plat et le collecteur est un élément tubulaire échangeur thermique produit en formant un élément plaqué ayant une couche de revêtement externe aménagée d'un côté de surface d'un matériau central et une couche de revêtement externe aménagée sur son autre côté via une couche intermédiaire en une configuration tubulaire avec la couche de revêtement externe tournée vers l'extérieur, et
dans lequel le matériau central de l'élément plaqué est fabriqué en un alliage d'aluminium comprenant du Mn : 0,8 à 2 % e n masse, du Mg : 0,2 à 1,5 % en masse, le restant étant de l'Al et des impuretés, la couche de revêtement externe est fabriquée en un alliage d'aluminium comprenant du Zn : 0,01 à 4 % en masse, le restant étant de l'Al et des impuretés, la couche intermédiaire est fabriquée en un alliage d'aluminium comprenant du Mn : 0,8 à 2 % en masse, du Zn : 0,35 à 3 % en masse, le restant étant de l'Al et des impuretés, et la couche de revêtement interne est fabriquée dans un matériau de brasage de la série Al-Si.

20. Procédé de fabrication d'un échangeur thermique comprenant une pluralité de tubes plats, des ailettes disposées entre les tubes plats et un collecteur raccordé aux premières extrémités des tubes plats, le procédé comprenant les étapes consistant à :
préparer un élément tubulaire d'échangeur thermique produit en formant un élément plaqué ayant un matériau central, une couche de revêtement externe aménagée d'un côté de la surface d'un matériau central et une couche de revêtement interne aménagée sur son autre côté via une couche intermédiaire en une configuration tubulaire avec la couche de revêtement externe tournée vers l'extérieur sous la forme d'au moins un élément choisi parmi le tube plat et le collecteur, dans lequel le matériau central de l'élément plaqué est fabriqué en un alliage d'aluminium comprenant du Mn : 0,8 à 2 % en masse, Mg : 0,2 à 1,5 % en masse, le restant étant de l'Al et des impuretés, la couche de revêtement externe est fabriquée en un alliage d'aluminium comprenant du Zn : 0,01 à 4 % en masse, le restant étant de l'Al et des impuretés, la couche intermédiaire est fabriquée en un alliage d'aluminium comprenant du Mn : 0,8 à 2 % en masse, Zn : 0,35 à 3 % en masse, le restant étant de l'Al et des impuretés, et la couche de revêtement interne est fabriquée en matériau de brasage de la série Al-Si ; et
braser les tubes plats et les ailettes ainsi que les tubes plats et le collecteur en utilisant un fondant de la série des fluorures.

21. Procédé de fabrication d'un échangeur thermique tel que décrit dans la revendication 20, dans lequel la quantité d'application du fondant de la série des fluorures au tube plat est de 2 g/m² ou plus.

22. Procédé de fabrication d'un échangeur thermique selon la revendication 21, dans lequel le fondant de la série des fluorures est appliqué à un côté interne du tube plat de sorte que sa quantité d'application soit supérieure à une quantité d'application du fondant appliqué sur un côté externe du tube plat.

23. Procédé de fabrication d'un échangeur thermique selon la revendication 22, dans lequel la quantité d'application du fondant des la série des fluorures sur le côté interne du tube plat est de 3 à 30 g/m².

24. Procédé de fabrication d'un échangeur thermique selon l'une quelconque des revendications 20 à 23, dans lequel la quantité d'application du fondant de la série des fluorures au collecteur est de 4 g/m² ou plus.
